(19)

**Europäisches Patentamt**
**European Patent Office**
**Office européen des brevets**

(11)  **EP 3 096 478 B1**

(12)  # EUROPEAN PATENT SPECIFICATION

(45) Date of publication and mention
of the grant of the patent:
**28.01.2026  Bulletin 2026/05**

(21) Application number: **14878960.5**

(22) Date of filing: **16.12.2014**

(51) International Patent Classification (IPC):
*H04L 5/00* (2006.01)        *H04L 1/00* (2006.01)
*H04J 11/00* (2006.01)       *H04L 1/16* (2023.01)
*H04L 27/01* (2006.01)

(52) Cooperative Patent Classification (CPC):
**H04L 1/0073; H04L 1/00; H04L 1/1671;**
**H04L 1/1861; H04W 76/10;** H04L 5/0055;
H04L 5/0057; H04L 5/0073

(86) International application number:
**PCT/JP2014/006241**

(87) International publication number:
**WO 2015/107600 (23.07.2015 Gazette 2015/29)**

(54) **METHOD FOR TRANSMITTING UPLINK CONTROL INFORMATION, WIRELESS TERMINAL AND BASE STATION**

VERFAHREN ZUR ÜBERTRAGUNG VON UPLINK-STEUERINFORMATIONEN, DRAHTLOSES ENDGERÄT UND BASISSTATION

PROCÉDÉ POUR TRANSMETTRE DES INFORMATIONS DE COMMANDE EN LIAISON MONTANTE, TERMINAL SANS FIL ET STATION DE BASE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **15.01.2014  JP 2014004945**

(43) Date of publication of application:
**23.11.2016  Bulletin 2016/47**

(73) Proprietor: **VTect IP Inc.**
**Minato-ku Tokyo 105-0003 (JP)**

(72) Inventor: **OKETANI, Kengo**
**Tokyo 108-8001 (JP)**

(74) Representative: **Hoffmann Eitle**
**Patent- und Rechtsanwälte PartmbB**
**Arabellastraße 30**
**81925 München (DE)**

(56) References cited:
EP-A2- 2 395 693        EP-A2- 2 637 347
WO-A2-2011/137408       JP-A- 2012 129 761
JP-A- 2013 507 015       US-A1- 2013 235 853

- **QUALCOMM INCORPORATED: "UCI Multiplexing for SU-MIMO Transmission", 3GPP DRAFT; R1-102762 UCI IN PUSCH WITH MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Montreal, Canada; 20100510 - 20100514, 4 May 2010 (2010-05-04), XP050598309**
- **ERICSSON: "Introduction of Rel-10 LTE-Advanced features in 36.211", 3GPP DRAFT; R1-105096 CR 36.211 RAN1#62, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Madrid, Spain; 20100823, 14 September 2010 (2010-09-14), XP050450319**
- **HUAWEI ET AL.: "CSI enhancements for TDD eIMTA", 3GPP TSG-RAN WG1#74B RL-134048, 28 September 2013 (2013-09-28), GUANGZHOU, CHINA, pages 4, XP050717240, Retrieved from the Internet <URL:http://www.3gpp.org/ftp/ tsg_ran/WG1_RL1/TSGR1_74b/Docs/R1-134048. zip>**

- **SAMSUNG: "DL and UL Power Control for eIMTA", 3GPP TSG-RAN WG1#73 R1-131965, 11 May 2013 (2013-05-11), XP050697749, Retrieved from the Internet <URL:http://www.3gpp.org/ftp/ tsg_ran/WG1_RL1/TSGR1_73/Docs/R1-131965. zip>**

**Description**

**Technical Field**

The present application relates to a wireless communication system and, particularly, to transmission of uplink control information from a wireless terminal to a base station.

**Background Art**

The structure of a radio frame used in 3rd Generation Partnership Project (3GPP) Long Term Evolution (LTE), time division duplex (TDD), and the overview of uplink transmission are described hereinafter. Further, enhanced interference mitigation and traffic adaptation (eIMTA), which has been recently discussed in 3GPP Release 12, is described.

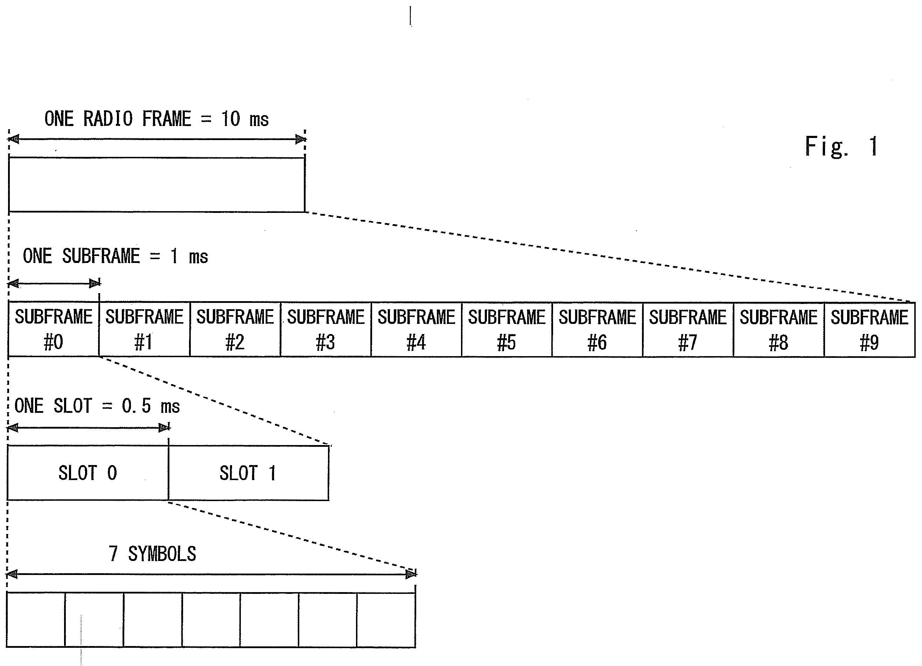

The LTE radio frame structure is described first. In 3GPP Release 8 and later (i.e., LTE), two types of radio frame structures are defined. One is called frame structure type 1, which is applicable to frequency division duplex (FDD). The other is called frame structure type 2, which is applicable to TDD. As shown in Fig. 1, in the frame structures of both type 1 and type 2, the length of one radio frame is 10 ms, and one radio frame is composed of 10 subframes. In the case of TDD, the first 5 subframes (#0 to #4) and the latter 5 subframes (#5 to #9) are collectively called half frames. The length of each half frame is 5 ms. The length of one subframe is 1 ms. Further, one subframe is divided into two slots, each having the length of 0.5 ms. In the case of the normal cyclic prefix, one slot includes 7 symbols (single carrier frequency division multiple access (SC-FDMA) symbols for uplink; orthogonal frequency division multiplexing (OFDM) symbols for downlink). Thus, one subframe includes 14 symbols in the time domain.

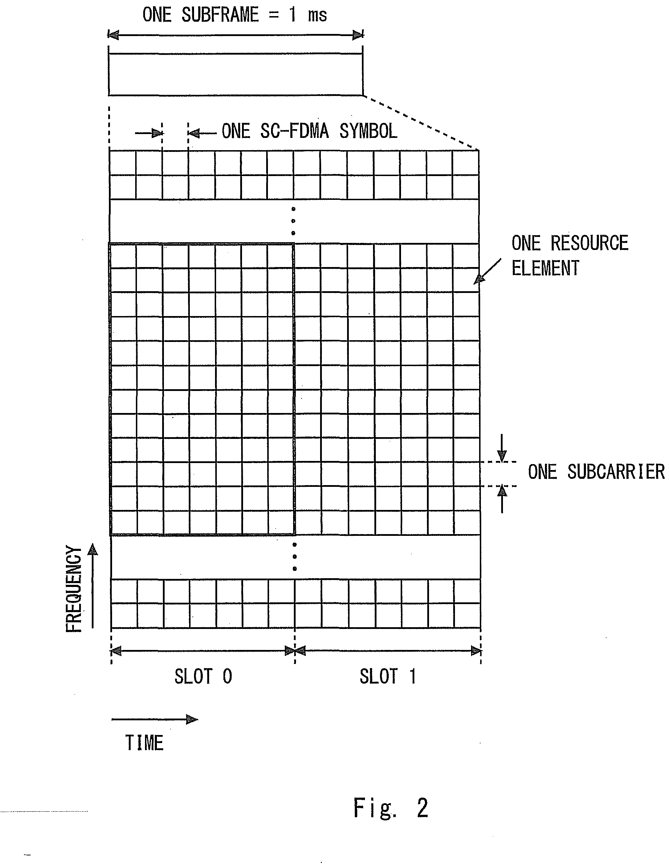

Fig. 2 shows radio resources where not only the time domain but also the frequency domain are taken into consideration. The smallest resource unit is the resource element, which consists of one symbol time in the time domain and one subcarrier in the frequency domain. The subcarrier interval is 15 kHz. The radio resource allocation of uplink and downlink is done in units of two consecutive resource blocks (subframe time length). One resource block has 7 symbols (0.5 ms) which corresponds to half of one subframe in the time domain and has 12 subcarriers in the frequency domain.

The uplink-downlink configurations (UL-DL configurations) supported by TDD LTE are described hereinbelow. In the case of TDD LTE, uplink subframes (UL subframes) and downlink subframes (DL subframes) coexist in one radio frame. Each UL subframe is a subframe in which uplink transmission from a wireless terminal to a base station is performed, and each DL subframe is a subframe in which downlink transmission from a base station to a wireless terminal is performed. The UL-DL configurations provide different placements of uplink subframes and downlink subframes in one radio frame.

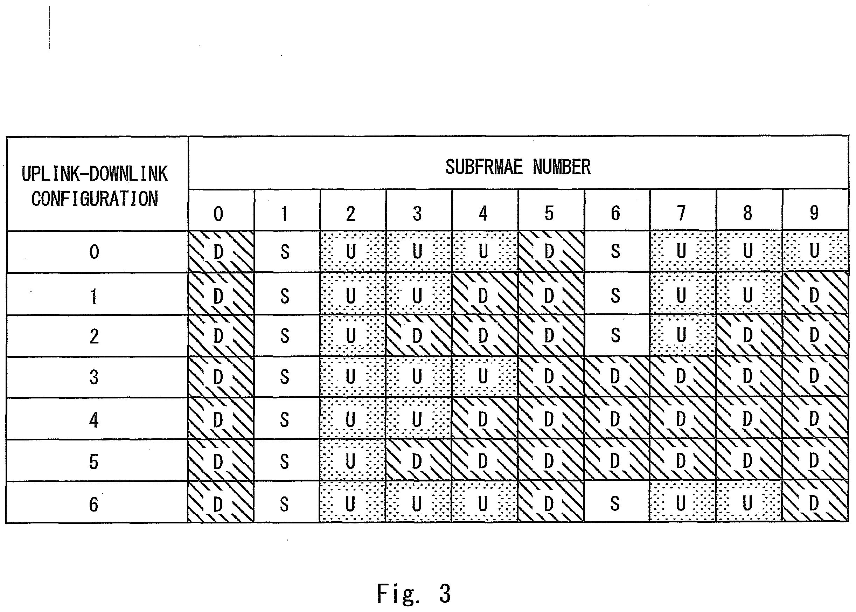

Fig. 3 shows seven uplink-downlink configurations (UL-DL configurations) disclosed in Non Patent Literature 1. In Fig. 3, "D" indicates a DL subframe, "U" indicates a UL subframe, and "S" indicates a special subframe. The switching from downlink transmission (DL subframes) to uplink transmission (UL subframes) is made in the second subframe in the half frame (i.e., in the subframes #1 and #6). When the switching from downlink transmission (DL subframes) to uplink transmission (UL subframes) is made, special subframes are placed. The special subframe is composed of a downlink pilot time slot (DwPTS) where downlink transmission is performed, a guard period (GP) where no transmission is performed, and an uplink pilot time slot (UpPTS) where uplink transmission is performed. In TDD LTE, any one of the UL-DL configurations shown in Fig. 3 is used with radio frame periodicity (10 ms).

The transmission of uplink control information (UCI) from a wireless terminal to a base station in 3GPP Release 8 and later (i.e., LTE) is described hereinbelow. The UCI can contain control information related to downlink communication. The control information related to downlink communication includes hybrid automatic repeat request (HARQ) ACK/NACK and channel state information (CSI). The CSI contains channel quality Indicators (CQIs) for link adaptation, and may further contain feedback related to multiple-input and multiple-output (MIMO) (i.e., pre-coding matrix indicators (PMIs) and rank indicators (RIs)).

When the UCI is transmitted in a subframe where no radio resource is allocated for a physical uplink shared channel (PUSCH), UCI is transmitted on a physical uplink control channel (PUCCH). On the other hand, when the UCI is transmitted in a subframe where radio resources are allocated for a PUSCH, UCI is transmitted on the PUSCH. The PUCCH is never transmitted in the same subframe as the PUSCH in 3GPP Releases 8 and. This is because, if the PUCCH and the PUSCH are simultaneously transmitted in the same subframe, the peak-to-average power ratio (PAPR) of uplink transmission signals increases. To be specific, the UCI is multiplexed on uplink shared channel (UL-SCH) data (i.e., a transport channel containing user data) prior to DFT spreading for generating a SC-FDMA signal (discrete Fourier transform spread OFDM (DFTS-OFDM) signal). Note that, in 3GPP Release 10 and later, a transmission mode for simultaneously transmitting the PUSCH and the PUCCH in the same subframe is defined. However, because this transmission mode causes an increase in the PAPR as described above, it is generally applied only to a small number of wireless terminals located near a base station. Therefore, in 3GPP Release 10 and later also, wireless terminals at a long distance from a base station generally use the transmission mode where the UCI is multiplexed on UL-SCH data and then transmitted in the PUSCH (which is the transmission mode to suppress the PAPR).

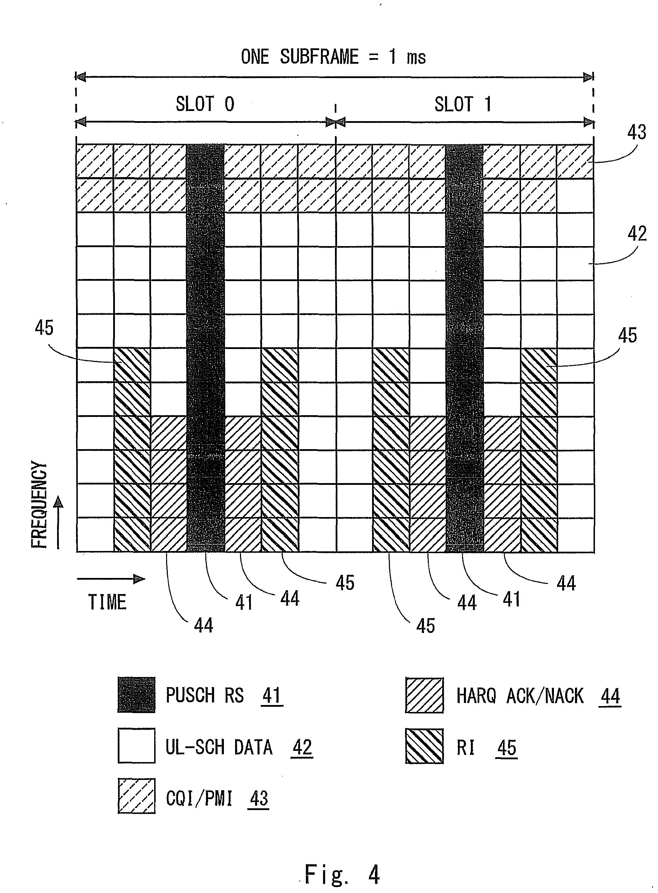

Fig. 4 shows one example of processing for multiplexing UCI (i.e., CQI/PMI, HARQ ACK/NACK and RI) on resource elements scheduled for the PUSCH together with UL-SCH data symbols. Note that Fig. 4 shows 168 resource elements corresponding to 2 resource blocks consisting of 14 symbols and 12 subcarriers. As shown in Fig. 4, reference signals (RSs) 41 (i.e., demodulation reference symbols (DMRSs)) is placed on the fourth SC-OFDMA (DFTS-OFDM) symbol of each slot. As shown in Fig. 4, coded CQI/PMI symbols 43 are placed at the beginning of available radio resources so as to sequentially occupy SC-FDMA symbols of one subcarrier. In order to prevent UL-SCH data from being punctured for CQI/PMI transmission, UL-SCH data is rate-matched around CQI/PMI bits so that it can be transmitted in the remaining radio resources 42. Coded HARQ ACK/NACK symbols 44 are placed next to SC-FDMA symbols of the reference signals (RSs) 41 by puncturing UL-SCH data in a channel interleaver. Coded RI symbols 45 are placed next to the positions of HARQ ACK/NACK symbols 44 shown in Fig. 4 regardless of whether the HARQ ACK/NACK symbols 44 actually exist in the current subframe.

The number of resource elements (the number of coded symbols) used for each of CQI/PMI, HARQ ACK/NACK and RI is determined in a wireless terminal based on modulation and coding scheme (MCS) of PUSCH (i.e., modulation order ($Q_m$)) and offset parameters $\beta^{CQI}_{offset}$, $\beta^{HARQ-ACK}_{offset}$ and $\beta^{RI}_{offset}$. The offset parameters $\beta^{CQI}_{offset}$, $\beta^{HARQ-ACK}_{offset}$ and $\beta^{RI}_{offset}$ are configured in a semi-static manner in upper-layer signaling between the wireless terminal and a base station (to be specific, RRC setup procedure). Specifically, as described in Section 8.6.3 of Non Patent Literature 3, in order to notify the UE of the offset parameters $\beta^{CQI}_{offset}$, $\beta^{HARQ-ACK}_{offset}$ and $\beta^{RI}_{offset}$, the base station transmits to the UE a set of indices $I^{CQI}_{offset}$, $I^{HARQ-ACK}_{offset}$ and $I^{RI}_{offset}$ which are associated with the values of the offset parameters.

As described in Section 5.2.2.6 of Non Patent Literature 2, the number of resource elements (the number of coded symbols) used for HARQ ACK/NACK and RI when PUSCH transmission is performed is determined using the following Equation (1):

$$ Q' = \min\left( \left\lceil \frac{O \cdot M_{sc}^{PUSCH-initial} \cdot N_{symb}^{PUSCH-initial} \cdot \beta_{offset}^{PUSCH}}{\sum_{r=0}^{C-1} K_r} \right\rceil , 4 \cdot M_{sc}^{PUSCH} \right) \quad \cdots (1) $$

In the above Equation (1), Q' is the number of coded symbols. O is the number of HARQ ACK/NACK bits or RI bits. $M^{PUSCH}_{sc}$ is the number of subcarriers scheduled for physical uplink shared channel (PUSCH) transmission in the current subframe for a transport block. $N^{PUSCH-initial}_{symb}$ is the number of single-carrier frequency division multiple access (SC-FDMA) symbols per subframe for initial PUSCH transmission for the same transport block. $M^{PUSCH-initial}_{sc}$, C, and $K_r$ are parameters obtained from initial physical downlink control channel (PDCCH) transmission for the same transport block. To be specific, $M^{PUSCH-initial}_{sc}$ is the number of allocated subcarriers at initial PUSCH transmission, C is the number of code blocks, and $K_r$ is the code block size of a code block index #r. Further, $\beta^{PUSCH}_{offset}$ is an offset parameter, and $\beta^{HARQ-ACK}_{offset}$ is used in the case of HARQ ACK/NACK, and $\beta^{RI}_{offset}$ is used in the case of RI.

Further, as described in Section 5.2.2.6 of Non Patent Literature 2, the number of resource elements (the number of coded symbols) used for CQI/PMI when PUSCH transmission is performed is determined using the following Equation (2):

$$ Q' = \min\left( \left\lceil \frac{(O+L) \cdot M_{sc}^{PUSCH-initial} \cdot N_{symb}^{PUSCH-initial} \cdot \beta_{offset}^{PUSCH}}{\sum_{r=0}^{C-1} K_r} \right\rceil , M_{sc}^{PUSCH} \cdot N_{symb}^{PUSCH} - \frac{Q_{RI}}{Q_m} \right) \quad \cdots (2) $$

In the above Equation (2), Q' is the number of coded symbols. O is the number of CQI bits. L is the number of cyclic redundancy check (CRC) bits applied to CQI/PMI. $M^{PUSCH}_{sc}$ is the number of subcarriers scheduled for physical uplink shared channel (PUSCH) transmission in the current subframe for a transport block. $N^{PUSCH}_{symb}$ is the number of single-carrier frequency division multiple access (SC-FDMA) symbols for the PUSCH transmission in the current subframe. $N^{PUSCH-initial}_{symb}$ is the number of SC-FDMA symbols per subframe for initial PUSCH transmission for the same transport block. $Q_{RI}$ is the number of rank indicator bits transmitted in the current subframe. $Q_m$ is the number of transmission bits per symbol in a modulation scheme applied to the PUSCH. $M^{PUSCH-initial}_{sc}$, C, and $K_r$ are parameters obtained from initial physical downlink control channel (PDCCH) transmission for the same transport block. To be specific, $M^{PUSCH-initial}_{sc}$ is the number of allocated subcarriers at initial PUSCH transmission, C is the number of code blocks, and $K_r$ is the code block size of a code block index #r. Further, $\beta^{PUSCH}_{offset}$ is an offset parameter, and $\beta^{CQI}_{offset}$ is used in the case of CQI/PMI.

A wireless terminal determines, based on the above Equation (1) or (2), the number of coded symbols Q' for each of HARQ ACK/NACK, RI and CQI/PMI in channel coding of uplink information channel (UCI). The wireless terminal then determines the number of coded HARQ ACK/NACK bits, the number of coded RI bits and the number of coded CQI/PMI bits based on modulation order ($Q_m$) allocated to PUSCH and the number of coded symbols Q', in accordance with the following Equations (3) to (5). After that, the wireless terminal performs channel coding, i.e. circular repetition or repetition coding, for HARQ ACK/NACK bits, RI bits and CQI/PMI bits based on the determined number of coded HARQ ACK/NACK bits, the determined number of coded RI bits and the determined number of coded CQI/PMI bits.

$$Q_{ACK} = Q_m \cdot Q' \ and \ \left[ \beta^{PUSCH}_{offset} = \beta^{HARQ-ACK}_{offset} \right] \quad \cdots (3)$$

$$Q_{RI} = Q_m \cdot Q' \ and \ \left[ \beta^{PUSCH}_{offset} = \beta^{RI}_{offset} \right] \quad \cdots (4)$$

$$Q_{CQI} = Q_m \cdot Q' \ and \ \left[ \beta^{PUSCH}_{offset} = \beta^{CQI}_{offset} \right] \quad \cdots (5)$$

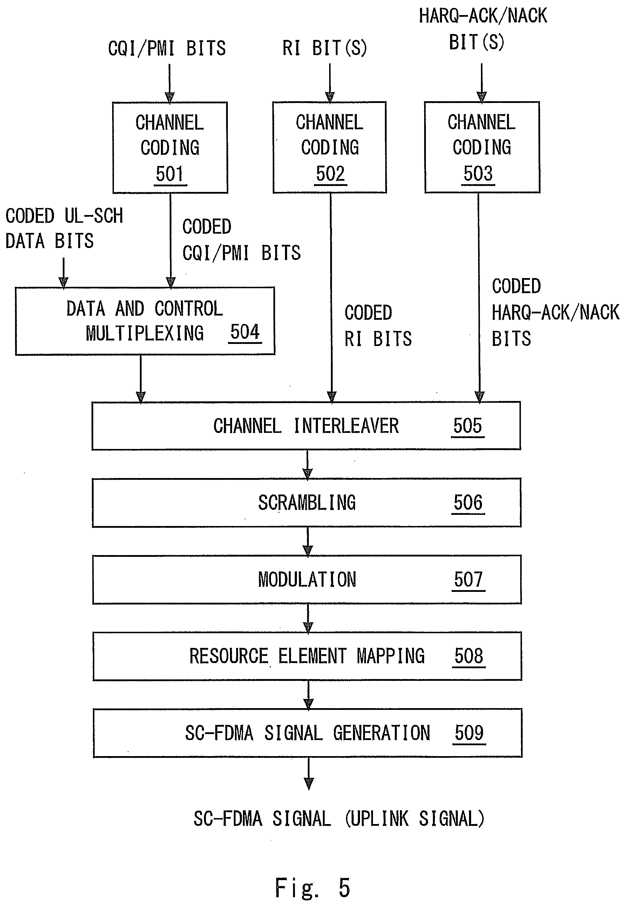

Processing on a transport channel UL-SCH and UCI for generating a physical channel PUSCH described in Non Patent Literatures 1 and 2 is described hereinafter with reference to Fig. 5. Because channel coding of the UCI is mainly focused here, the illustration of transport block CRC attachment, code block segmentation and code block CRC attachment, channel coding of UL-SCH, rate matching, and code block concatenation for UL-SCH data bits (transport block) is omitted.

A channel coding unit 501 performs channel coding on CQI/PMI bits and thereby generates coded CQI/PMI bits. A channel coding unit 502 performs channel coding on RI bit(s) and thereby generates coded RI bits. A channel coding unit 503 performs channel coding on HARQ ACK/NACK bit(s) and thereby generates coded HARQ ACK/NACK bits. The channel coding units 501 to 503 determine the number of coded symbols Q' for UCI according to the above Equation (1) or (2), determine the number of coded UCI bits, and then perform channel coding in accordance with the number of coded UCI bits.

A multiplexer 504 multiplexes coded UL-SCH data bits and coded CQI/PMI bits so that the coded CQI/PMI symbols 43 are mapped at the beginning of available radio resources as shown in Fig. 4.

A channel interleaver 505 performs interleaving on the output bits of the multiplexer 504, the coded HARQ ACK/NACK bits, and the coded RI bits so that the HARQ ACK/NACK symbols 44 and the coded RI symbols 45 are placed around the reference signal (RS) 41 in the time domain as shown in Fig. 4.

A scrambler 506 multiplies the outputs bits of the channel interleaver 505 by a scrambling sequence. A modulator 507 maps the block of the scrambled bits to modulated symbols and thereby generates a modulated symbol sequence. A resource element mapper 508 maps the modulated symbol sequence to resource elements in a resource block allocated for PUSCH transmission.

A SC-FDMA signal generator 509 generates an SC-FDMA signal from the modulated symbol sequence. Specifically, the SC-FDMA signal generator 509 performs DFT spreading on M number of modulated symbols corresponding to the radio resources allocated in one subframe, maps M number of frequency domain signals after DFT spreading to subcarriers in accordance with the mapping by the resource element mapper 508, and then generates an SC-FDMA signal (DFTS-OFDM signal) by performing N-point inverse fast Fourier transform (IFFT). Note that, because M<N in general, zero is inserted to a DFT output signal to the size of the N-subcarrier of IFFT (i.e., ODFM modulation).

The concept of eIMTA discussed in 3GPP Release 12 and an example of the operation of the same are described hereinafter. According to the definition by the 3GPP Releases 8-11, the UL-DL configuration is operated in a semi-static manner. Specifically, according to the definition by the 3GPP Releases 8-10, one UL-DL configuration is determined for each base station, and the base station transmits downlink broadcast information containing the predetermined UL-DL configuration. Wireless terminals receive the UL-DL configuration from the base station and thereby determine that a specific subframe is either an UL subframe or a DL subframe. However, because the semi-static UL-DL configuration cannot follow a rapid increase in communication traffic or a change in the amount of downlink or uplink traffic, the problem of being unable to make effective use of radio resources is pointed out. In view of this, in 3GPP Release 12 and later, the operation for dynamically switching UL-DL configurations at short intervals (e.g., at intervals of 10 to 80 ms) has been discussed. This operation is referred to as the work item "eIMTA" and is currently being discussed (as of December 2013).

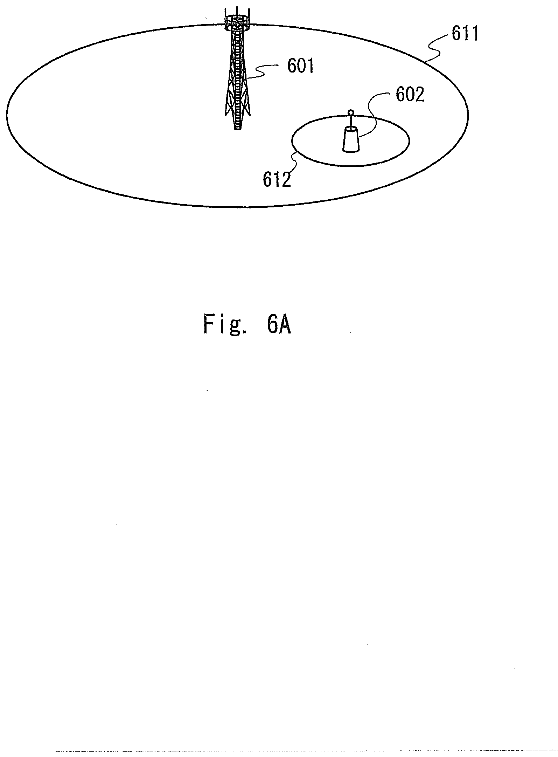

Fig. 6A shows one example of a wireless communication system to which eIMTA studied in 3GPP is applied. In the example of Fig. 6A, the wireless communication system includes a macro cell base station 601 and a small cell base station 602. The macro cell base station 601 has a coverage area (macro cell) 611. A coverage area (small cell) 612 of the small cell base station 602 is smaller than the coverage area (macro cell) 611, and it is completely covered by the coverage area (macro cell) 611, or at least partly overlaps the coverage area (macro cell) 611. The small cell base station 602 is used to offload the traffic of the macro cell base station 601.

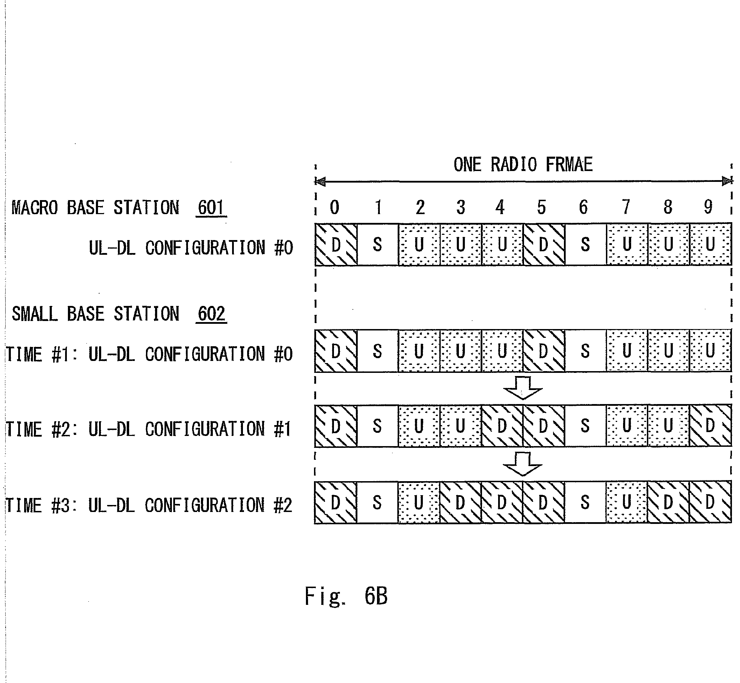

Fig. 6B shows one example of changes of the UL-DL configuration when eIMTA is applied to the small cell base station 602 shown in Fig. 6A. At time #1, the small cell base station 602 uses the same UL-DL configuration #0 as the macro cell base station 601. Note that it is assumed that the macro cell base station 601 uses the UL-DL configuration #0 in a semi-static manner. Then, when the downlink traffic temporarily increases in the coverage area 612, for example, the small cell base station 602 changes the UL-DL configuration from the configuration #0 to the configuration #1 at time #2. Accordingly, the subframes #4 and #9 change from the UL subframe to the DL subframe. Thus, the small cell base station 602 can deal with the increased downlink traffic. When the downlink traffic in the coverage area 612 further increases, the small cell base station 602 changes the UL-DL configuration from the configuration #1 to the configuration #2 at time #3. Accordingly, the subframes #3 and #8, in addition to the subframes #4 and #9, change from the UL subframe to the DL subframe. In this manner, with use of the eIMTA technology, it is possible to dynamically switch the UL-DL configuration with a change in traffic load, for example.

The concept of two subframes that are defined in the discussion on eIMTA in 3GPP is described for the following discussion. One is called a fixed subframe where the transmission direction (uplink/downlink) is semi-static and unchanged. The other is called a flexible subframe or a valuable subframe where the transmission direction is variable as in the example of Fig. 6B. With reference to the example of Fig. 6B, the subframes #0, #1, #2, #5, #6, and #7 are fixed subframes, and the subframes #3, #4, #8, and #9 are flexible subframes.

**Citation List**

Non Patent Literature 1: 3GPP TS 36.211 V8.9.0 (2009-12), "3rd Generation Partnership Project; Technical Specification Group Radio Access Network; Evolved Universal Terrestrial Radio Access (E-UTRA); Physical Channels and Modulation (Release 8)", December 2009

Non Patent Literature 2: 3GPP TS 36.212 V8.8.0 (2009-12), "3rd Generation Partnership Project; Technical Specification Group Radio Access Network; Evolved Universal Terrestrial Radio Access (E-UTRA); Multiplexing and channel coding (Release 8)", December 2009

Non Patent Literature 3: 3GPP TS 36.213 V8.8.0 (2009-09), "3rd Generation Partnership Project; Technical Specification Group Radio Access Network; Evolved Universal Terrestrial Radio Access (E-UTRA); Physical layer procedures (Release 8)", September 2009

WO 2011/137408 A2 discloses methods and devices that select uplink (UL) transmission resources for transmitting uplink control information (UCI). A determination may be made that UCI should be transmitted. A physical channel resource for transmission of the UCI may be selected and a wireless transmit/receive unit (WRTU) may transmit the UCI over a physical uplink channel capable of supporting multiple component carriers using the selected physical channel resource. The selection of the physical channel resource may include at least one of: selecting a pre-determined UL component carrier (CC) for uplink transmission on a physical uplink control shared channel (PUSCH) upon a PUSCH resource being available in a subframe, or, selecting a pre-determined UL CC for uplink transmission on a physical uplink control channel (PUCCH) capable of UCI transmission in the subframe upon a PUSCH resource not being available in the subframe.

EP 2637347 A2 discloses methods and apparatus for a User Equipment (UE) to determine a number of coded modulation symbols per spatial layer for an Uplink Control Information (UCI) type it multiplexes in a Physical Uplink Shared CHannel (PUSCH). The UE communicates with different sets of Reception Points (RPs) in different Transmission Time Intervals (TTIs) wherein two RPs in a same set of RPs have a communication latency that is smaller than or equal to a predetermined value and two RPs in two different respective sets of RPs have a communication latency that is larger than a predetermined value.

**Summary of Invention**

**Technical Problem**

The inventor has studied on problems related to interference when eIMTA is applied. Specifically, when a dynamic change in the UL-DL configuration is made as described above, there is a possibility that inter-cell interference becomes particularly significant in flexible subframes. This is because, in flexible subframes, the transmission direction (uplink/downlink) can be different between neighbor base stations as shown in Fig. 6B. For example, in flexible subframes in Fig. 6B (i.e., the subframes #3, #4, #8 and #9), there is a possibility that downlink signals transmitted from the small cell base station 602 interfere with uplink signals received by the macro cell base station 601. In other words, there is a possibility that an interference level contained in uplink signals received by a base station in flexible subframes is different from that in fixed subframes, and specifically the interference level in uplink received signals during flexible subframes is higher than that in fixed subframes.

One example of a problem that occurs due to inter-cell interference is as follows. For example, HARQ retransmission mechanism is not used for UCI (CQI/PMI, HARQ ACK/NACK and RI) transmission. Thus, in the case where a base station (e.g., the macro cell base station 601) receives UCI symbols on a PUSCH in a subframe where a neighbor base station (e.g., the small cell base station 602) uses a flexible subframe, there is a possibility that reception quality of the UCI is deteriorated due to the above-described inter-cell interference. The deterioration of the reception quality of UCI affects the optimization of the system and can cause a decrease in system throughput.

Note that the deterioration of the reception quality of UCI can occur not only when eIMTA is applied and flexible subframes are used in LTE TDD. In a first example, different UL-DL configurations may be configured in two neighbor base stations. In this case, the uplink transmission of one base station and the downlink transmission of the other base station can occur at the same time. In a second example, the synchronization between radio frames of two neighbor base stations is not sufficient. If the synchronization between radio frames is not sufficient, the uplink transmission of one base station and the downlink transmission of the other base station can occur at the same time even when two neighbor base stations use the same UL-DL configuration. In a third example, there may be periodic interference from another system affecting on a specific subframe within each periodic radio frame. In the third case, the level of interference contained in uplink signals is different for each subframe not only in TDD LTE but also in FDD LTE.

As can be seen from the above, the level of interference experienced on UCI symbols transmitted on a PUSCH can be largely different for each subframe depending on whether the subframe is a fixed subframe or a flexible subframe or other causes (e.g., difference in UL-DL configurations, insufficient synchronization between radio frames, or interference from another system). However, it should be noted that a method of calculating the number of resource elements (the number of coded symbols) used for UCI (CQI/PMI, HARQ ACK/NACK or RI) is common regardless of subframes. Specifically, values that are substituted to the offset parameters $\beta^{PUSCH}_{offset}$ (i.e., $\beta^{CQI}$ offset, $\beta^{HARQ-ACK}$ offset, and $\beta^{RI}_{offset}$) in the above-described Equations (1) and (2) are semi-statically configured and common to all subframes. Therefore, it is difficult to selectively increase the number of resource elements (the number of coded symbols) for UCI in a specific subframe only, and thus difficult to enhance redundancy of coded UCI bits in a specific subframe only.

**Solution to Problem**

The invention provides a wireless terminal a base station and associated methods that contribute to adjusting redundancy of coded UCI bits on a per-subframe basis as set out in the appended claims.

**Advantageous Effects of Invention**

According to the above-described aspects, it is possible to provide a method, a wireless terminal, a base station and a program that contribute to adjusting redundancy of coded UCI bits on a per-subframe basis.

**Brief Description of Drawings**

Fig. 1 is a diagram showing a radio frame structure and a subframe structure of LTE;
Fig. 2 is a diagram showing a radio resource grid of one subframe;
Fig. 3 is a table showing six UL-DL configurations defined in relation to TDD LTE;
Fig. 4 is a diagram showing one example of processing for multiplexing uplink control information (UCI) on resource elements scheduled for PUSCH;
Fig. 5 is a diagram showing processing on a transport channel UL-SCH and UCI performed by a wireless terminal;
Fig. 6A is a diagram showing one example of a wireless communication system to which eIMTA is applied;
Fig. 6B is a diagram showing one example of changes of the UL-DL configuration when eIMTA is applied;

Fig. 7 is a diagram showing a configuration example of a wireless communication system according to a first embodiment;

Fig. 8 is a flowchart showing one example of processing performed by a wireless terminal according to the first embodiment;

Fig. 9A is a diagram showing one example of a wireless communication system to which eIMTA is applied according to the first embodiment;

Fig. 9B is a diagram showing one example of a change of the UL-DL configuration when eIMTA is applied according to the first embodiment;

Fig. 10 is a sequence diagram showing one example of a procedure to send an offset parameter $\beta^{PUSCH}_{offset}$ from a base station to a wireless terminal according to the first embodiment;

Fig. 11 is a block diagram showing a configuration example of a wireless terminal according to the first embodiment; and

Fig. 12 is a block diagram showing a configuration example of a base station according to the first embodiment.

## Description of Embodiments

Specific embodiments will be described hereinafter in detail with reference to the drawings. The same or corresponding elements are denoted by the same reference symbols throughout the drawings and repeated descriptions thereof are omitted as appropriate to clarify the explanation.

First embodiment

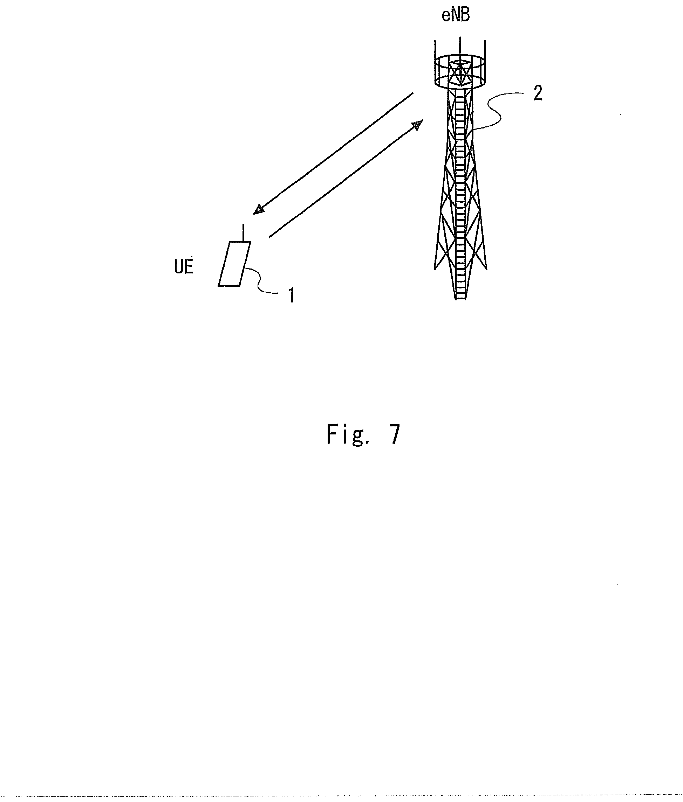

Fig. 7 shows a configuration example of a wireless communication system according to this embodiment. The wireless communication system provides communication services, such as voice communication or packet data communication or both, for example. Referring to Fig. 7, the wireless communication system includes a wireless terminal 1 and a base station 2. The wireless terminal 1 generates an uplink signal and transmits it to the base station 2. The base station 2 generates a downlink signal and transmits it to the wireless terminal 1. This embodiment is described based on the assumption that the wireless communication system is a system in 3GPP Release 8 and later (i.e., LTE). Specifically, the wireless terminal 1 corresponds to a user equipment (UE) that supports LTE, and the base station 2 corresponds to an eNodeB (eNB).

A procedure for calculating the number of resource elements (the number of coded symbols) used for UCI (CQI/PMI, HARQ ACK/NACK or RI) which is performed by the wireless terminal 1 according to this embodiment, is described hereinafter. The wireless terminal 1 operates to change a method of calculating the number of coded symbols for UCI (CQI/PMI, HARQ ACK/NACK or RI) between a first subframe and a second subframe within each periodic radio frame. Specifically, when the wireless terminal 1 transmits UCI (CQI/PMI, HARQ ACK/NACK or RI) in the first subframe of a radio frame, it determines the number of coded symbols for the UCI by a first calculation method. Further, when the wireless terminal 1 transmits UCI in the second subframe of the same radio frame, it determines the number of coded symbols Q' for the UCI by a second calculation method different from the first calculation method.

By applying different calculation methods, it is possible to differentiate the number of coded symbols (Q') for UCI between the first subframe and the second subframe, even if other parameters such as the number of UCI bits (O) and the number of subcarriers (M $^{PUSCH}_{sc}$) scheduled for PUSCH transmission are the same between the first and second subframes. As described earlier, the number of coded symbols (Q') for UCI determines the number of coded UCI bits, which is transmitted in one subframe, and further determines the redundancy of UCI bits obtained by channel coding (e.g., circular repetition or repetition coding). Thus, the wireless terminal 1 according to this embodiment can contribute to adjusting the redundancy of coded UCI bits on a per-subframe basis. For example, the wireless terminal 1 can increase the number of coded symbols (Q') for UCI only in a specific subframe (e.g., second subframe) and thereby enhance the redundancy of coded UCI bits in the specific subframe only.

Several examples of the first and second subframes are described hereinbelow. In the first example, the first subframe may be a fixed subframe in the case where eIMTA is applied, and the second subframe may be a flexible subframe in the case where eIMTA is applied. As described earlier, the fixed subframe is a subframe where the transmission direction is statically or semi-statically fixed to either one of the uplink direction or the downlink direction. On the other hand, the flexible subframe is a subframe where the transmission direction is dynamically switched between the uplink direction and the downlink direction.

Note that, as is understood from the above description with reference to Figs. 6A and 6B, in the case where a neighbor base station adjacent to the base station 2 uses flexible subframes and switches UL subframes to DL subframes, interference experienced by the base station 2 on UCI symbols, which is received from the wireless terminal 1, from downlink signals of the neighbor base station can be a problem. That is, the fixed subframe and the flexible subframe based on eIMTA can be operated not by the base station 2 but by the neighbor base station. Accordingly, in the first example, the first subframe and the second subframe can be regarded as a fixed subframe and a flexible subframe, respectively, used in a neighbor base station different from the base station 2 which the wireless terminal 1 communicates with.

In the second example, the first subframe and the second subframe may be two subframes where the level of interference experienced by the base station 2 on uplink signals (particularly, UCI symbols transmitted on a PUSCH) is different from each other. As described earlier, the level of interference experienced on UCI symbols transmitted on a PUSCH can be largely different for each subframe due to some causes (e.g., difference in the UL-DL configurations, insufficient synchronization between radio frames, or interference from another system). Interference from another system can be a problem not only in TDD LTE but also in FDD LTE. Thus, the second example is not only for TDD LTE but also for FDD LTE. Further, because the above-described first example is a special case where inter-cell interference is particularly concerned in TDD LTE, the first example can be regarded as one specific example included in the second example.

In the above-described first example on the first and second radio frames, the first and second calculation methods are preferably defined so that the number of coded symbols Q' for UCI in a flexible subframe (or a flexible subframe in a neighbor base station) is larger than that in a fixed subframe (or a fixed subframe in a neighbor base station). In the above-described second example on the first and second radio frames, the first and second calculation methods are preferably defined so that the number of coded symbols Q' for UCI in a subframe where the level of interference experienced on UCI symbols transmitted on a PUSCH is relatively high is larger than that in a subframe where the level of interference experienced on UCI symbols is relatively low. The wireless terminal 1 can thereby use a larger number of coded symbols (resource elements) for UCI in the flexible subframe or the subframe where the level of interference experienced on UCI symbols is high. Accordingly, the wireless terminal 1 can enhance the redundancy of UCI bits in the flexible subframe or the subframe where the level of interference experienced on UCI symbols is high and thereby improve the reception quality of UCI bits. In other words, even when the level of interference experienced on UCI symbols is different between the first and second subframes, it is possible to suppress a variation in the reception quality of UCI bits between the first subframe and the second subframe.

Note that the base station 2 may estimate the level of interference experienced in received uplink signals on a per-subframe basis and differentiate among subframes based on the uplink interference level. Then, the base station 2 may determine a calculation method for obtaining the number of coded symbols Q' on a per-subframe basis based on the interference level. The estimation of the level of interference experienced in uplink signals may be made using a known interference power estimation algorithm. Further, in the case of TDD LTE, the estimation of the level of interference in uplink signals may be made using a CQI regarding downlink signals received from the wireless terminal 1.

Several examples of the first and second calculation methods are described hereinafter. Calculation formulas for obtaining the number of coded symbols (the number of resource elements) for UCI (CQI/PMI, HARQ ACK/NACK or RI) are defined in Non Patent Literature 2 as shown in Equations (1) and (2). Thus, in order to minimize the impact of a change in specification on the existing base stations and wireless terminals, it is preferred to modify Equations (1) and (2) so that the number of coded symbols (Q') is different between the first and second subframes.

Accordingly, in one example, the first and second calculation methods preferably use the same calculation formula (i.e., Equation (1) or (2)) in order to determine the number of coded symbols (Q') for UCI. Note that, however, a value that is substituted into ($\beta^{PUSCH}_{offset}$ in Equation (1) or (2) by the second calculation method is different from a value that is substituted into ($\beta^{PUSCH}_{offset}$ by the first calculation method. Specifically, by using different values for $\beta^{PUSCH}_{offset}$ between the first and second subframes within the same radio frame, it is possible to easily differentiate the number of coded symbols (Q') for UCI between the first and second subframes with use of the existing calculation formula (i.e., Equation (1) or (2)). For the convenience of description, the value of $\beta^{PUSCH}$ that is used for calculation of the number of coded symbols ($Q'_1$) for UCI in the first subframe is denoted as ($\beta^{PUSCH}_{offset\,1}$ or $\beta 1$. Likewise, the value of $\beta^{PUSCH}$ that is used for calculation of the number of coded symbols ($Q'_2$) for UCI in the second subframe is denoted as ($\beta^{PUSCH}_{offset\,2}$ or $\beta 2$. $\beta^{PUSCH}_{offset\,1}$ ($\beta 1$) and $\beta^{PUSCH}_{offset\,2}$ ($\beta 2$) may be associated by the following Equation (6) or (7). $\Delta\beta^{PUSCH}_{offset}$ in Equations (6) and (7) may be a common value that is common to all wireless terminals in a cell or may be a UE-specific or dedicated value that is dedicated per wireless terminal.

$$\beta^{PUSCH}_{offset\,2} = \beta^{PUSCH}_{offset\,1} \times \Delta\beta^{PUSCH}_{offset} \qquad \cdots (6)$$

$$\beta^{PUSCH}_{offset\,2} = \beta^{PUSCH}_{offset\,1} + \Delta\beta^{PUSCH}_{offset} \qquad \cdots (7)$$

As a specific example, consider the case where ($\beta^{PUSCH}_{offset\,2}$ ($\beta 2$) is set to a value that is double the value of $\beta^{PUSCH}_{offset\,1}$ ($\beta 1$). According to the definition of Equation (6), $\Delta\beta^{PUSCH}_{offset} = 2$. In this case, as is obvious from Equations (1) and (2), the number of coded symbols ($Q'_2$) for UCI in the second subframe is double the number of coded symbols ($Q'_1$)

for UCI in the first subframe, as a general rule (i.e., unless exceeding $4 \cdot M^{PUSCH}_{sc}$).

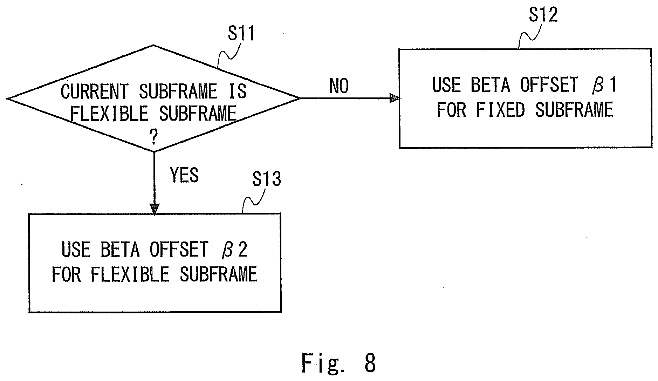

Fig. 8 is a flowchart showing one example of processing of the wireless terminal 1 according to this embodiment. Fig. 8 assumes the case where eIMTA is applied. In Step S11, the wireless terminal 1 determines whether the current subframe is a flexible subframe (or a flexible subframe in a neighbor base station) or not. When the current subframe is a fixed subframe (NO in Step S11), the wireless terminal 1 calculates the number of coded symbols ($Q'_1$) for UCI by using Equation (1) or (2) and the offset parameter $\beta^{PUSCH}_{offset\,1}$ ($\beta1$) for fixed subframes in Step S12. On the other hand, when the current subframe is a flexible subframe (YES in Step S11), the wireless terminal 1 calculates the number of coded symbols ($Q'_2$) for UCI by using Equation (1) or (2) and the offset parameter $\beta^{PUSCH}_{offset\,2}$ ($\beta2$) for flexible subframes in Step S13.

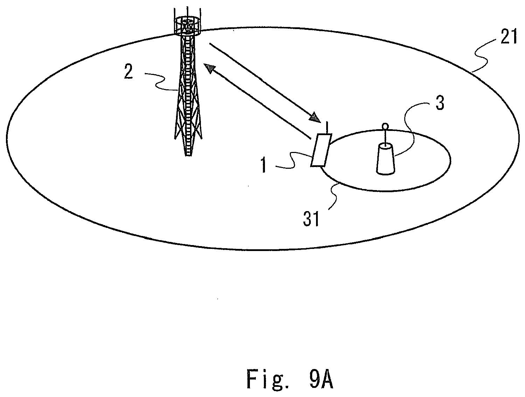

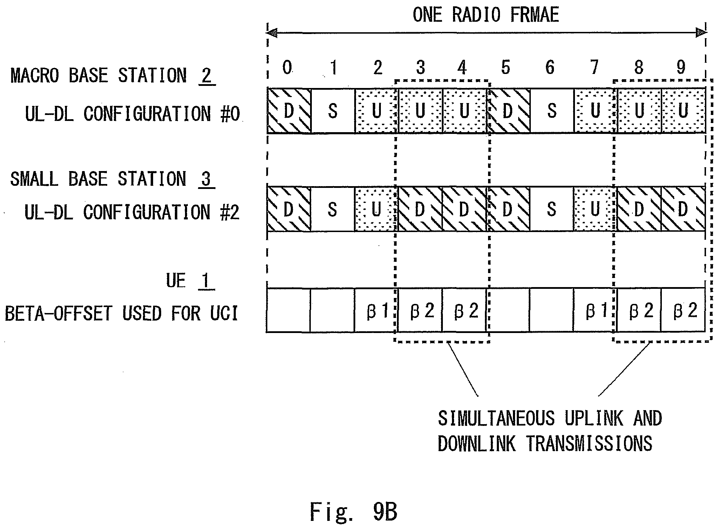

Figs. 9A and 9B show an example in which eIMTA is applied to the wireless communication system according to this embodiment. As shown in Fig. 9A, the base station 2 has a coverage area 21 and communicates with the wireless terminal 1 in the coverage area 21. A base station 3 is a small cell base station that is placed within the coverage area 21 of the base station 2 and has a coverage area 31 which is smaller than the coverage area 21. In Fig. 9A, eIMTA is applied to the base station 3, and the base station 3 dynamically changes its UL-DL configuration.

Fig. 9B shows UL-DL configurations of the base stations 2 and 3 at a certain point of time and the value of a beta offset ($\beta^{PUSCH}_{offset}$ that is used by the wireless terminal 1 for calculating the number of coded symbols (Q') for UCI. In the example of Fig. 9B, the base station 2 uses the UL-DL configuration #0, and the base station 3 uses the UL-DL configuration #2. Thus, in the subframes #3, #4, #8, and #9, uplink transmission from the wireless terminal 1 to the base station 2 and downlink transmission by the base station 3 are performed concurrently. The subframes #0, #1, #2, #5, #6, and #7 of the base station 3 are fixed subframes. The subframes #3, #4, #8, and #9 of the base station 3 are flexible subframes. The wireless terminal 1 calculates the number of coded symbols ($Q'_1$) for UCI by using the beta offset ($\beta^{PUSCH}_{offset\,1}$ (($\beta1$) for fixed subframes in order to transmit UCI on a PUSCH in the subframes #2 and #7 (which correspond to some of the fixed subframes in the base station 3). On the other hand, the wireless terminal 1 calculates the number of coded symbols ($Q'_2$) for UCI by using the beta offset $\beta^{PUSCH}_{offset\,2}$ ($\beta2$) for flexible subframes in order to transmit UCI on a PUSCH in the subframes #3, #4, #8 and #9 (which correspond to the flexible subframes in the base station 3).

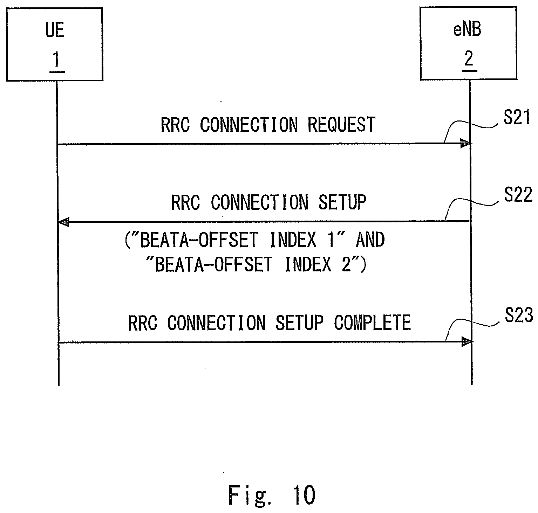

A procedure to send the two offset parameters $\beta^{PUSCH}_{offset\,1}$ ($\beta1$) and $\beta^{PUSCH}_{offset\,2}$ ($\beta2$) from the base station 2 to the wireless terminal 1 is described hereinafter. Fig. 10 is a sequence diagram showing one example of the notification procedure of ($\beta1$ and $\beta2$. In the example of Fig. 10, the base station 2 sends to the wireless terminal 1 the values of ($\beta1$ and $\beta2$ or first and second indices respectively indicating the values of ($\beta1$ and $\beta2$ during an RRC Setup procedure. In Step S21, the wireless terminal 1 sends an RRC connection request message to the base station 2. In Step S22, the base station 2 sends an RRC setup message in response to the RRC connection request message. The RRC setup message in Step S22 indicates the first and second indices respectively indicating the values of $\beta1$ and $\beta2$. In Step S23, the wireless terminal 1 sets up an RRC connection according to the RRC setup message and sends an RRC setup complete message to the base station 2.

For example, the first and second indices may be contained in a pusch-ConfigDedicated information element within a radioResourceConfigDedicated information element of the RRC setup message. The existing pusch-ConfigDedicated information element contains betaOffset-ACK-Index, betaOffset-RI-Index and betaOffset-CQI-Index. The betaOffset-ACK-Index, betaOffset-RI-Index and betaOffset-CQI-Index respectively indicate $\beta^{HARQ-ACK}_{offset}$, $\beta^{RI}_{offset}$ and $\beta^{CQI}_{offset}$. On the other hand, the modified pusch-ConfigDedicated information element according to this embodiment may contain betaOffset-ACK-Index1 and betaOffset-ACK-Index2 in place of or in addition to the betaOffset-ACK-Index. The betaOffset-ACK-Index1 indicates the first index associated with $\beta1$, and the betaOffset-ACK-Index2 indicates the second index associated with $\beta2$. Likewise, the modified pusch-ConfigDedicated information element may contain betaOffset-RI-Index1 and betaOffset-RI-Index2 in place of or in addition to the betaOffset-RI-Index. Furthermore, the modified pusch-ConfigDedicated information element may contain betaOffset-CQI-Index1 and betaOffset-CQI-Index2 in place of or in addition to the betaOffset-CQI-Index.

Note that the example of Fig. 10 is no more than one example of a notification procedure of ($\beta1$ and $\beta2$. In another example, the base station 2 may send the values of $\beta1$ and $\beta2$ or the first and second indices to the wireless terminal 1 by using an RRC Connection Reconfiguration message.

Further or alternatively, the base station 2 may send, to the wireless terminal 1, $\Delta\beta^{PUSCH}_{offset}$ defined by Equation (6) or (7) together with the value of $\beta^{PUSCH}_{offset\,1}$ ($\beta1$) or the corresponding first index. The $\Delta\beta^{PUSCH}_{offset}$ may be a value that is common to all wireless terminals in a cell or may be a UE-specific or dedicated value that is dedicated per wireless terminal. When $\Delta\beta^{PUSCH}_{offset}$ is a common value to all wireless terminals in a cell, the base station 2 may include $\Delta\beta^{PUSCH}_{offset}$ into System Information (e.g., a pusch-Config information element within a radioResourceConfigCommon information element of a system information block 2 (SIB2)) to send it to the wireless terminal 1. When $\Delta\beta^{PUSCH}_{offset}$ is a UE-specific value, the base station 2 may send $\Delta\beta^{PUSCH}_{offset}$ to the wireless terminal 1 by using an information element within an RRC Setup message or an RRC connection reconfiguration message (e.g., a pusch-ConfigDedicated information element within a radioResourceConfigDedicated information element).

(this paragraph does not form part of the claimed invention)

As described above, the use of a common calculation formula (i.e., Equation (1) or (2)) to determine the number of coded symbols (Q') for UCI in the first and second calculation methods has an advantage of minimizing the impact of a change in specification on the existing base stations and wireless terminals. However, in another example of the first and second calculation methods, the second calculation method may use a different calculation formula from a calculation formula (e.g., Equation (1) or (2)) used by the first calculation method to determine the number of coded symbols (Q'). For example, the first calculation method may use Equation (1) and the second calculation method may use the following Equation (8). Equation (8) is a modification of Equation (1), and the ceiling function in the right side is multiplied by a weight parameter W. The weight parameter W serves in substantially the same way as $\Delta\beta^{PUSCH}_{offset}$ in the above-described Equation (6).

$$Q'_2 = \min\left( w \cdot \left\lceil \frac{O \cdot M_{sc}^{PUSCH-initial} \cdot N_{symb}^{PUSCH-initial} \cdot \beta_{offset}^{PUSCH}}{\sum_{r=0}^{C-1} K_r} \right\rceil, 4 \cdot M_{sc}^{PUSCH} \right) \quad \cdots(8)$$

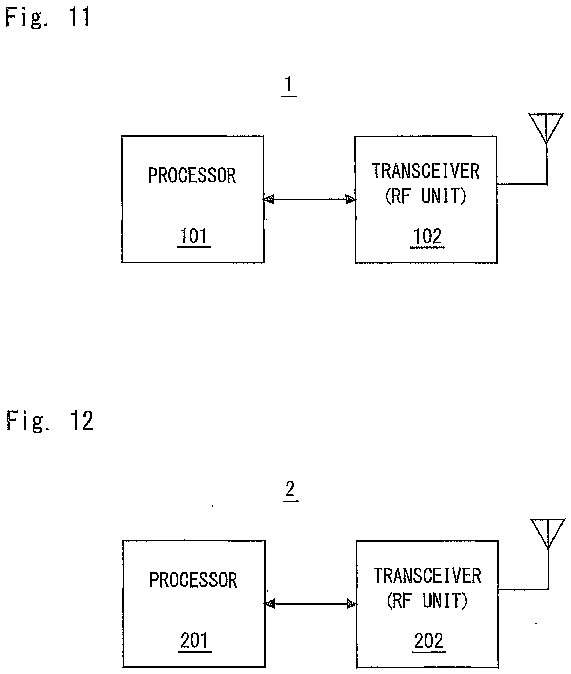

Hereinafter, configuration examples of the wireless terminal 1 and the base station 2 are described. Fig. 11 is a block diagram showing a configuration example of the wireless terminal 1. In the example of Fig. 11, the wireless terminal 1 include a processor 101 and a transceiver 102. The transceiver 102 may be referred to also as a radio frequency (RF) unit. The processor 101 generates an uplink signal (i.e., baseband SC-DFMA signal). The transceiver 102 generates an uplink RF signal by frequency up conversion of the uplink signal generated by the processor 101, and amplifies and transmits the uplink RF signal.

The processor 101 is configured to change a method of calculating the number of coded symbols for UCI (CQI/PMI, HARQ ACK/NACK or RI) between the first subframe and the second subframe within each periodic radio frame in the process of generating the uplink signal (baseband SC-DFMA signal). Specifically, when the processor 101 transmits UCI (CQI/PMI, HARQ ACK/NACK or RI) in the first subframe of a radio frame, it determines the number of coded symbols for the UCI by the first calculation method. Further, when the processor 101 transmits UCI in the second subframe of the same radio frame, it determines the number of coded symbols (Q') for the UCI by the second calculation method which is different from the first calculation method.

Fig. 12 is a block diagram showing a configuration example of the base station 2. In the example of Fig. 12, the base station 2 includes a processor 201 and a transceiver 202. The transceiver 202 may be referred to also as a radio frequency (RF) unit. The processor 201 generates a downlink signal (i.e., baseband OFDM signal). The transceiver 202 generates a downlink RF signal by frequency up conversion of the downlink signal generated by the processor 201, and amplifies and transmits the downlink RF signal.

The processor 201 transmits, to the wireless terminal 1, first and second values (e.g., β1 and β2) to be substituted into a first parameter (e.g., offset parameter $\beta^{PUSCH}_{offset}$) contained in a calculation formula (e.g., Equation (1) or (2)) for determining the number of coded symbols for UCI (CQI/PMI, HARQ ACK/NACK or RI) or the corresponding first and second indices indicating those first and second values.

Other embodiments

The base station 2 according to the first embodiment may include offset parameters ($\beta^{PUSCH}_{offset\ 1}$ (β1) and $\beta^{PUSCH}_{offset\ 2}$ (β2) or indices indicating them into a message transmitted through an inter-base-station interface (x2 interface) or an interface with a core network (S1-MME interface) in order for an inbound or outbound handover of the wireless terminal 1 (e.g., handover request message or handover required message). In other words, the base station 2 may transmit the offset parameters ($\beta^{PUSCH}_{offset\ 1}$ (β1) and ($\beta^{PUSCH}_{offset\ 2}$ (β2) or indices indicating them as information of a radio access bearer (RAB) to be configured in a target base station.

The first embodiment is described mainly by using a specific example related to an LTE system. However, the first embodiment may be applied to another wireless communication system, and particularly to a wireless communication system that uses an uplink communication scheme similar to LTE (i.e., OFDM or DFTS-OFDM).

In the first embodiment, transmission of uplink control information (UCI) is mainly described. However, a technique of determining the number of coded symbols (the number of resource elements) described in the first embodiment may be applied to transmission of uplink user data (UL-SCH data).

The operations of the wireless terminal 1 and the base station 2 described in the first embodiment may be implemented by causing a computer including at least one processor (e.g., microprocessor, Micro Processing Unit (MPU), Central Processing Unit (CPU)) to execute a program. To be specific, one or more programs containing instructions that cause a computer to perform an algorithm related to the wireless terminal 1 or the base station 2 described with reference to Figs. 8 to 10 and the like may be supplied to the computer.

These programs can be stored and provided to the computer using any type of non-transitory computer readable medium. The non-transitory computer readable medium includes any type of tangible storage medium. Examples of the non-transitory computer readable medium include magnetic storage media (such as flexible disks, magnetic tapes, hard disk drives, etc.), optical magnetic storage media (e.g., magneto-optical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). These programs may be provided to a computer using any type of transitory computer readable medium. Examples of the transitory computer readable medium include electric signals, optical signals, and electromagnetic waves. The transitory computer readable medium can provide the programs to a computer via a wired communication line (e.g., electric wires, and optical fibers) or a wireless communication line.

Further, the above-described embodiments are merely an exemplification of application of the technical ideas obtained by the present inventor. The technical ideas are not limited to the above-described embodiments, and various changes and modifications may be made as a matter of course.

This application is based upon and claims the benefit of priority from Japanese patent application No. 2014-004945, filed on January 15, 2014.

**Reference Signs List**

| | |
|---|---|
| 1 | WIRELESS TERMINAL |
| 2 | BASE STATION |
| 3 | BASE STATION |
| 21, 31 | COVERAGE AREA |
| 101 | PROCESSOR |
| 102 | TRANSCEIVER |
| 201 | PROCESSOR |
| 202 | TRANSCEIVER |

**Claims**

1. A wireless terminal (1) **characterized by** comprising:

means for receiving, from a base station (2), a first betaOffset-RI-Index and a second betaOffset-RI-Index;
means for, when transmitting a first uplink signal in a first subframe of a radio frame, determining a first number of coded symbols for the first uplink signal by a first calculation method; and
means for, when transmitting a second uplink signal in a second subframe of the radio frame, determining a second number of coded symbols for the second uplink signal by a second calculation method,
wherein the first and second uplink signals each comprise a rank indicator, RI,
wherein the second calculation method uses the same calculation formula as the first calculation method,
wherein the calculation formula used by the first calculation method uses a first beta offset value corresponding the first betaOffset-RI-Index,
wherein the calculation formula used by the second calculation method uses a second beta offset value corresponding the second betaOffset-RI-Index,
wherein the first betaOffset-RI-Index is an index that is different from the second betaOffset-RI-Index,
wherein the wireless terminal (1) is configured to perform time division duplex, TDD, operation,
wherein the first subframe is a subframe where a transmission direction is statically or semi-statically fixed to an uplink direction,
wherein the second subframe is a subframe where the transmission direction is dynamically switched between the uplink direction and the downlink direction,
wherein the first and second calculation methods are such that the second number of the coded symbols calculated for the second subframe is larger than the first number of the coded symbols calculated for the first subframe,
wherein the calculation formula comprises a calculation:

$$Q' = \min\left(\left\lceil \frac{O \cdot M_{sc}^{PUSCH-initial} \cdot N_{symb}^{PUSCH-initial} \cdot \beta_{offset}^{PUSCH}}{\sum_{r=0}^{C-1} K_r} \right\rceil, 4 \cdot M_{sc}^{PUSCH}\right)$$

where Q' is the first number of the coded symbols or the second number of the coded symbols,

O is the number of RI bits,

$M_{sc}^{PUSCH}$ is the number of subcarriers scheduled for physical uplink shared channel (PUSCH) transmission in a current subframe for a transport block,

$N_{symb}^{PUSCH-initial}$ is the number of single-carrier frequency division multiple access (SC-FDMA) symbols per subframe for initial PUSCH transmission for the same transport block,

$M_{sc}^{PUSCH-initial}$, C, and $K_r$ are parameters obtained from initial physical downlink control channel (PDCCH) transmission for the same transport block, and

$\beta_{offset}^{PUSCH}$ is an offset parameter corresponding to the first beta offset value or the second beta offset value.

2. The wireless terminal (1) according to Claim 1, wherein the radio frame is repeated periodically every 10 subframes.

3. The wireless terminal (1) according to Claim 1 or 2, wherein the first betaOffset-RI-Index and the second betaOffset-RI-Index are contained in a pusch-configDedicated information element within a radioResourceConfigDedicated information element of a RRC connection setup message.

4. A base station (2) **characterized by** comprising:

means for transmitting, to a wireless terminal (1), a first betaOffset-RI-Index and a second betaOffset-RI-Index; and

means for receiving, from the wireless terminal (1), a first uplink signal and a second uplink signal,

wherein the first and second uplink signals each comprise a rank indicator, RI,

wherein the first betaOffset-RI-Index corresponds a first beta offset value used in a calculation formula for determining a first number of coded symbols for the first uplink signal by the calculation formula of a first calculation method when the wireless terminal (1) transmits the first uplink signal in a first subframe of a radio frame,

wherein the second betaOffset-RI-Index corresponds a second beta offset value used in the calculation formula for determining a second number of coded symbols for the second uplink signal by the calculation formula of a second calculation method when the wireless terminal (1) transmits the second uplink signal in a second subframe of the radio frame,

wherein the second calculation method uses the same calculation formula as the first calculation method,

wherein the first betaOffset-RI-Index is an index that is different from the second betaOffset-RI-Index,

wherein the base station (2) is configured to perform time division duplex, TDD, operation.

wherein the first subframe is a subframe where a transmission direction is statically or semi-statically fixed to an uplink direction,

wherein the second subframe is a subframe where the transmission direction is dynamically switched between the uplink direction and the downlink direction,

wherein the first and second calculation methods are such that the second number of the coded symbols calculated for the second subframe is larger than the first number of the coded symbols calculated for the first subframe,

wherein the calculation formula comprises a calculation:

$$Q' = \min\left(\left\lceil \frac{O \cdot M_{sc}^{PUSCH-initial} \cdot N_{symb}^{PUSCH-initial} \cdot \beta_{offset}^{PUSCH}}{\sum_{r=0}^{C-1} K_r} \right\rceil, 4 \cdot M_{sc}^{PUSCH}\right)$$

where Q' is the first number of the coded symbols or the second number of the coded symbols,

O is the number of RI bits,

$M^{PUSCH}_{sc}$ is the number of subcarriers scheduled for physical uplink shared channel (PUSCH) transmission in a current subframe for a transport block,

$N^{PUSCH-initial}_{symb}$ is the number of single-carrier frequency division multiple access (SC-FDMA) symbols per subframe for initial PUSCH transmission for the same transport block,

$M^{PUSCH-initial}_{sc}$, C, and $K_r$ are parameters obtained from initial physical downlink control channel (PDCCH) transmission for the same transport block, and

$\beta^{PUSCH}_{offset}$ is an offset parameter corresponding to the first beta offset value or the second beta offset value.

5. The base station (2) according to Claim 4, wherein the radio frame is repeated periodically every 10 subframes.

6. The base station (2) according to Claim 4 or 5, wherein the first betaOffset-RI-Index and the second betaOffset-RI-Index are contained in a pusch-configDedicated information element within a radioResourceConfigDedicated information element of a RRC connection setup message.

7. A method performed by a wireless terminal (1) comprising:

receiving, from a base station (2), a first betaOffset-RI-Index and a second betaOffset-RI-Index;

when transmitting a first uplink signal in a first subframe of a radio frame, determining a first number of coded symbols for the first uplink signal by a first calculation method; and

when transmitting a second uplink signal in a second subframe of the radio frame, determining a second number of coded symbols for the second uplink signal by a second calculation method,

wherein the first and second uplink signals each comprise a rank indicator, RI,

wherein the second calculation method uses the same calculation formula as the first calculation method,

wherein the calculation formula used by the first calculation method uses a first beta offset value corresponding the first betaOffset-RI-Index,

wherein the calculation formula used by the second calculation method uses a second beta offset value corresponding the second betaOffset-RI-Index,

wherein the first betaOffset-RI-Index is an index that is different from the second betaOffset-RI-Index,

wherein the wireless terminal (1) is configured to perform time division duplex, TDD, operation,

wherein the first subframe is a subframe where a transmission direction is statically or semi-statically fixed to an uplink direction,

wherein the second subframe is a subframe where the transmission direction is dynamically switched between the uplink direction and the downlink direction,

wherein the first and second calculation methods are such that the second number of the coded symbols calculated for the second subframe is larger than the first number of the coded symbols calculated for the first subframe,

wherein the calculation formula comprises a calculation:

$$Q' = \min\left(\left\lceil \frac{O \cdot M^{PUSCH-initial}_{sc} \cdot N^{PUSCH-initial}_{symb} \cdot \beta^{PUSCH}_{offset}}{\sum_{r=0}^{C-1} K_r} \right\rceil, 4 \cdot M^{PUSCH}_{sc}\right)$$

where Q' is the first number of the coded symbols or the second number of the coded symbols,

O is the number of RI bits,

$M^{PUSCH}_{sc}$ is the number of subcarriers scheduled for physical uplink shared channel (PUSCH) transmission in a current subframe for a transport block,

$N^{PUSCH-initial}_{symb}$ is the number of single-carrier frequency division multiple access (SC-FDMA) symbols per subframe for initial PUSCH transmission for the same transport block,

$M^{PUSCH-initial}_{sc}$, C, and $K_r$ are parameters obtained from initial physical downlink control channel (PDCCH) transmission for the same transport block, and

$\beta^{PUSCH}_{offset}$ is an offset parameter corresponding to the first beta offset value or the second beta offset value.

8. The method according to Claim 7, wherein the radio frame is repeated periodically every 10 subframes.

9. The method according to Claim 7 or 8, wherein the first betaOffset-RI-Index and the second betaOffset-RI-Index are contained in a pusch-configDedicated information element within a radioResourceConfigDedicated information element of a RRC connection setup message.

10. A method performed by a base station (2) comprising:

transmitting, to a wireless terminal (1), a first betaOffset-RI-Index and a second betaOffset-RI-Index; and
receiving, from the wireless terminal (1), a first uplink signal and a second uplink signal,
wherein the first and second uplink signals each comprise a rank indicator, RI,
wherein the first betaOffset-RI-Index corresponds a first beta offset value used in a calculation formula for determining a first number of coded symbols for the first uplink signal by the calculation formula of a first calculation method when the wireless terminal (1) transmits the first uplink signal in a first subframe of a radio frame,
wherein the second betaOffset-RI-Index corresponds a second beta offset value used in the calculation formula for determining a second number of coded symbols for the second uplink signal by the calculation formula of a second calculation method when the wireless terminal (1) transmits the second uplink signal in a second subframe of the radio frame,
wherein the second calculation method uses the same calculation formula as the first calculation method,
wherein the first betaOffset-RI-Index is an index that is different from the second betaOffset-RI-Index,
wherein the base station (2) is configured to perform time division duplex, TDD, operation.
wherein the first subframe is a subframe where a transmission direction is statically or semi-statically fixed to an uplink direction,
wherein the second subframe is a subframe where the transmission direction is dynamically switched between the uplink direction and the downlink direction,
wherein the first and second calculation methods are such that the second number of the coded symbols calculated for the second subframe is larger than the first number of the coded symbols calculated for the first subframe,
wherein the calculation formula comprises a calculation:

$$Q' = \min\left(\left\lceil \frac{O \cdot M_{sc}^{PUSCH-initial} \cdot N_{symb}^{PUSCH-initial} \cdot \beta_{offset}^{PUSCH}}{\sum_{r=0}^{C-1} K_r} \right\rceil, 4 \cdot M_{sc}^{PUSCH} \right)$$

where Q' is the first number of the coded symbols or the second number of the coded symbols,
O is the number of RI bits,
$M_{sc}^{PUSCH}$ is the number of subcarriers scheduled for physical uplink shared channel (PUSCH) transmission in a current subframe for a transport block,
$N_{symb}^{PUSCH-initial}$ is the number of single-carrier frequency division multiple access (SC-FDMA) symbols per subframe for initial PUSCH transmission for the same transport block,
$M_{sc}^{PUSCH-initial}$, C, and $K_r$ are parameters obtained from initial physical downlink control channel (PDCCH) transmission for the same transport block, and
$\beta_{offset}^{PUSCH}$ is an offset parameter corresponding to the first beta offset value or the second beta offset value.

11. The method according to Claim 10, wherein the radio frame is repeated periodically every 10 subframes.

12. The method according to Claim 10 or 11, wherein the first betaOffset-RI-Index and the second betaOffset-RI-Index are contained in a pusch-configDedicated information element within a radioResourceConfigDedicated information element of a RRC connection setup message.

**Patentansprüche**

1. Drahtloses Endgerät (1), **dadurch gekennzeichnet, dass** es Folgendes umfasst:

Mittel zum Empfangen eines ersten betaOffset-RI-Index und eines zweiten betaOffset-RI-Index von einer Basisstation (2);
Mittel zum Bestimmen, bei Übertragung eines ersten Uplink-Verbindungssignals in einem ersten Unterrahmen eines Funkrahmens, einer ersten Anzahl codierter Symbole für das erste Uplink-Verbindungssignal mittels eines ersten Berechnungsverfahrens; und
Mittel zum Bestimmen, bei Übertragung eines zweiten Uplink-Verbindungssignals in einem zweiten Unterrahmen des Funkrahmens, einer zweiten Anzahl codierter Symbole für das zweite Uplink-Verbindungssignal mittels eines zweiten Berechnungsverfahrens,
wobei die ersten und zweiten Uplink-Verbindungssignale jeweils einen Rangindikator, RI, umfassen,
wobei das zweite Berechnungsverfahren dieselbe Berechnungsformel wie das erste Berechnungsverfahren verwendet,
wobei die von dem ersten Berechnungsverfahren verwendete Berechnungsformel einen ersten betaOffset-Wert verwendet, der dem ersten betaOffset-RI-Index entspricht,
wobei die von dem zweiten Berechnungsverfahren verwendete Berechnungsformel einen zweiten betaOffset-Wert verwendet, der dem zweiten betaOffset-RI-Index entspricht,
wobei der erste betaOffset-RI-Index ein Index ist, der sich von dem zweiten betaOffset-RI-Index unterscheidet,
wobei das drahtlose Endgerät (1) dazu konfiguriert ist, einen Zeitduplex-, TDD-, Betrieb durchzuführen,
wobei der erste Unterrahmen ein Unterrahmen ist, bei dem eine Übertragungsrichtung statisch oder semistatisch auf die Uplink-Verbindungsrichtung festgelegt ist,
wobei der zweite Unterrahmen ein Unterrahmen ist, bei dem die Übertragungsrichtung dynamisch zwischen der Uplink-Verbindungsrichtung und der Abwärtsverbindungsrichtung umgeschaltet wird,
wobei die ersten und zweiten Berechnungsverfahren derart sind, dass die für den zweiten Unterrahmen berechnete zweite Anzahl der codierten Symbole größer ist als die für den ersten Unterrahmen berechnete erste Anzahl der codierten Symbole,
wobei die Berechnungsformel eine Berechnung umfasst:

$$Q' = \min\left(\left\lceil \frac{O \cdot M_{sc}^{PUSCH-initial} \cdot N_{symb}^{PUSCH-initial} \cdot \beta_{offset}^{PUSCH}}{\sum\limits_{r=0}^{C-1} K_r} \right\rceil, 4 \cdot M_{sc}^{PUSCH}\right)$$

wobei Q' die erste Anzahl der codierten Symbole oder die zweite Anzahl der codierten Symbole ist,
O die Anzahl der RI-Bits ist,
$M_{sc}^{PUSH}$ die Anzahl von Unterträgern ist, die für die Übertragung des physikalischen Uplink-Verbindungskanals (PUSCH) in einem aktuellen Unterrahmen für einen Transportblock geplant sind,
$N_{symb}^{PUSCH-initial}$ die Anzahl von Einzelträger-Frequenzmultiplexzugriffs- (SC-FDMA)- Symbolen je Unterrahmen für eine anfängliche PUSCH-Übertragung für denselben Transportblock ist,
$M_{sc}^{PUSCH-initial}$, C und $K_r$ Parameter sind, die aus einer anfänglichen Übertragung des physikalischen Abwärtsverbindungs-Steuerkanals (PDCCH) für denselben Transportblock erhalten werden, und
$\beta_{offset}^{PUSH}$ ein Offset-Parameter ist, der dem ersten betaOffset-Wert oder dem zweiten betaOffset-Wert entspricht.

2. Drahtloses Endgerät (1) nach Anspruch 1, wobei der Funkrahmen periodisch alle 10 Unterrahmen wiederholt wird.

3. Drahtloses Endgerät (1) nach Anspruch 1 oder 2, wobei der erste betaOffset-RI-Index und der zweite betaOffset-RI-Index in einem pusch-configDedicated-Informationselement innerhalb eines radioResourceConfigDedicated-Informationselements einer RRC-Verbindungsaufbaunachricht enthalten sind.

4. Basisstation (2), **dadurch gekennzeichnet, dass** sie Folgendes umfasst:

Mittel zum Übertragen eines ersten betaOffset-RI-Index und eines zweiten betaOffset-RI-Index an ein drahtloses Endgerät (1); und

Mittel zum Empfangen eines ersten Uplink-Verbindungssignals und eines zweiten Uplink-Verbindungssignals von dem drahtlosen Endgerät (1),

wobei die ersten und zweiten Uplink-Verbindungssignale jeweils einen Rangindikator, RI, umfassen,

wobei der erste betaOffset-RI-Index einem ersten betaOffset-Wert entspricht, der in einer Berechnungsformel zum Bestimmen einer ersten Anzahl codierter Symbole für das erste Uplink-Verbindungssignal durch die Berechnungsformel eines ersten Berechnungsverfahrens verwendet wird, wenn das drahtlose Endgerät (1) das erste Uplink-Verbindungssignal in einem ersten Unterrahmen eines Funkrahmens überträgt,

wobei der zweite betaOffset-RI-Index einem zweiten betaOffset-Wert entspricht, der in der Berechnungsformel zum Bestimmen einer zweiten Anzahl codierter Symbole für das zweite Uplink-Verbindungssignal durch die Berechnungsformel eines zweiten Berechnungsverfahrens verwendet wird, wenn das drahtlose Endgerät (1) das zweite Uplink-Verbindungssignal in einem zweiten Unterrahmen des Funkrahmens überträgt,

wobei das zweite Berechnungsverfahren dieselbe Berechnungsformel wie das erste Berechnungsverfahren verwendet,

wobei der erste betaOffset-RI-Index ein Index ist, der sich von dem zweiten betaOffset-RI-Index unterscheidet,

wobei die Basisstation (2) dazu konfiguriert ist, einen Zeitduplex-, TDD-, Betrieb durchzuführen.

wobei der erste Unterrahmen ein Unterrahmen ist, bei dem eine Übertragungsrichtung statisch oder semistatisch auf eine Uplink-Verbindungsrichtung festgelegt ist,

wobei der zweite Unterrahmen ein Unterrahmen ist, bei dem die Übertragungsrichtung dynamisch zwischen der Uplink-Verbindungsrichtung und der Abwärtsverbindungsrichtung umgeschaltet wird,

wobei die ersten und zweiten Berechnungsverfahren derart sind, dass die für den zweiten Unterrahmen berechnete zweite Anzahl der codierten Symbole größer ist als die für den ersten Unterrahmen berechnete erste Anzahl der codierten Symbole,

wobei die Berechnungsformel eine Berechnung umfasst:

$$Q' = \min\left(\left\lceil \frac{O \cdot M_{sc}^{PUSCH-initial} \cdot N_{symb}^{PUSCH-initial} \cdot \beta_{offset}^{PUSCH}}{\sum_{r=0}^{C-1} K_r} \right\rceil, 4 \cdot M_{sc}^{PUSCH}\right)$$

wobei Q' die erste Anzahl der codierten Symbole oder die zweite Anzahl der codierten Symbole ist,

O die Anzahl der RI-Bits ist,

$M_{sc}^{PUSH}$ die Anzahl von Unterträgern ist, die für die Übertragung des physikalischen Uplink-Verbindungskanals (PUSCH) in einem aktuellen Unterrahmen für einen Transportblock geplant sind,

$N_{symb}^{PUSCH-initial}$ die Anzahl von Einzelträger-Frequenzmultiplexzugriffs- (SC-FDMA)- Symbolen je Unterrahmen für eine anfängliche PUSCH-Übertragung für denselben Transportblock ist,

$M_{sc}^{PUSCH-initial}$, C und $K_r$ Parameter sind, die aus einer anfänglichen Übertragung des physikalischen Abwärtsverbindungs-Steuerkanals (PDCCH) für denselben Transportblock erhalten werden, und

$\beta_{offset}^{PUSH}$ ein Offset-Parameter ist, der dem ersten betaOffset-Wert oder dem zweiten betaOffset-Wert entspricht.

**5.** Basisstation (2) nach Anspruch 4, wobei der Funkrahmen periodisch alle 10 Unterrahmen wiederholt wird.

**6.** Basisstation (2) nach Anspruch 4 oder 5, wobei der erste betaOffset-RI-Index und der zweite betaOffset-RI-Index in einem pusch-configDedicated-Informationselement innerhalb eines radioResourceConfigDedicated-Informationselements einer RRC-Verbindungsaufbaunachricht enthalten sind.

**7.** Verfahren, das von einem drahtlosen Endgerät (1) durchgeführt wird, umfassend:

Empfangen eines ersten betaOffset-RI-Index und eines zweiten betaOffset-RI-Index von einer Basisstation (2);
Bestimmen, bei Übertragung eines ersten Uplink-Verbindungssignals in einem ersten Unterrahmen eines Funkrahmens, einer ersten Anzahl codierter Symbole für das erste Uplink-Verbindungssignal mittels eines ersten Berechnungsverfahrens; und

Bestimmen, bei Übertragung eines zweiten Uplink-Verbindungssignals in einem zweiten Unterrahmen des Funkrahmens, einer zweiten Anzahl codierter Symbole für das zweite Uplink-Verbindungssignal mittels eines zweiten Berechnungsverfahrens,

wobei die ersten und zweiten Uplink-Verbindungssignale jeweils einen Rangindikator, RI, umfassen,

wobei das zweite Berechnungsverfahren dieselbe Berechnungsformel wie das erste Berechnungsverfahren verwendet,

wobei die von dem ersten Berechnungsverfahren verwendete Berechnungsformel einen ersten betaOffset-Wert verwendet, der dem ersten betaOffset-RI-Index entspricht,

wobei die von dem zweiten Berechnungsverfahren verwendete Berechnungsformel einen zweiten betaOffset-Wert verwendet, der dem zweiten betaOffset-RI-Index entspricht,

wobei der erste betaOffset-RI-Index ein Index ist, der sich von dem zweiten betaOffset-RI-Index unterscheidet,

wobei das drahtlose Endgerät (1) dazu konfiguriert ist, einen Zeitduplex-, TDD-, Betrieb durchzuführen,

wobei der erste Unterrahmen ein Unterrahmen ist, bei dem eine Übertragungsrichtung statisch oder semistatisch auf die Uplink-Verbindungsrichtung festgelegt ist,

wobei der zweite Unterrahmen ein Unterrahmen ist, bei dem die Übertragungsrichtung dynamisch zwischen der Uplink-Verbindungsrichtung und der Abwärtsverbindungsrichtung umgeschaltet wird,

wobei die ersten und zweiten Berechnungsverfahren derart sind, dass die für den zweiten Unterrahmen berechnete zweite Anzahl der codierten Symbole größer ist als die für den ersten Unterrahmen berechnete erste Anzahl der codierten Symbole,

wobei die Berechnungsformel eine Berechnung umfasst:

$$Q' = \min\left(\left\lceil \frac{O \cdot M_{sc}^{PUSCH-initial} \cdot N_{symb}^{PUSCH-initial} \cdot \beta_{offset}^{PUSCH}}{\sum_{r=0}^{C-1} K_r} \right\rceil, 4 \cdot M_{sc}^{PUSCH}\right)$$

wobei Q' die erste Anzahl der codierten Symbole oder die zweite Anzahl der codierten Symbole ist,

O die Anzahl der RI-Bits ist,

$M_{sc}^{PUSH}$ die Anzahl von Unterträgern ist, die für die Übertragung des physikalischen Uplink-Verbindungskanals (PUSCH) in einem aktuellen Unterrahmen für einen Transportblock geplant sind,

$N_{symb}^{PUSCH-initial}$ die Anzahl von Einzelträger-Frequenzmultiplexzugriffs- (SC-FDMA)- Symbolen je Unterrahmen für eine anfängliche PUSCH-Übertragung für denselben Transportblock ist,

$M_{sc}^{PUSCH-initial}$, C und $K_r$ Parameter sind, die aus einer anfänglichen Übertragung des physikalischen Abwärtsverbindungs-Steuerkanals (PDCCH) für denselben Transportblock erhalten werden, und

$\beta_{offset}^{PUSH}$ ein Offset-Parameter ist, der dem ersten betaOffset-Wert oder dem zweiten betaOffset-Wert entspricht.

**8.** Verfahren nach Anspruch 7, wobei der Funkrahmen periodisch alle 10 Unterrahmen wiederholt wird.

**9.** Verfahren nach Anspruch 7 oder 8, wobei der erste betaOffset-RI-Index und der zweite betaOffset-RI-Index in einem pusch-configDedicated-Informationselement innerhalb eines radioResourceConfigDedicated-Informationselements einer RRC-Verbindungsaufbaunachricht enthalten sind.

**10.** Verfahren, das von einer Basisstation (2) durchgeführt wird, umfassend:

Übertragen eines ersten betaOffset-RI-Index und eines zweiten betaOffset-RI-Index an ein drahtloses Endgerät (1); und

Empfangen eines ersten Uplink-Verbindungssignals und eines zweiten Uplink-Verbindungssignals von dem drahtlosen Endgerät (1),

wobei die ersten und zweiten Uplink-Verbindungssignale jeweils einen Rangindikator, RI, umfassen,

wobei der erste betaOffset-RI-Index einem ersten betaOffset-Wert entspricht, der in einer Berechnungsformel zum Bestimmen einer ersten Anzahl codierter Symbole für das erste Uplink-Verbindungssignal durch die Berechnungsformel eines ersten Berechnungsverfahrens verwendet wird, wenn das drahtlose Endgerät (1) das erste Uplink-Verbindungssignal in einem ersten Unterrahmen eines Funkrahmens überträgt,

wobei der zweite betaOffset-RI-Index einem zweiten betaOffset-Wert entspricht, der in der Berechnungsformel zum Bestimmen einer zweiten Anzahl codierter Symbole für das zweite Uplink-Verbindungssignal durch die Berechnungsformel eines zweiten Berechnungsverfahrens verwendet wird, wenn das drahtlose Endgerät (1) das zweite Uplink-Verbindungssignal in einem zweiten Unterrahmen des Funkrahmens überträgt,

wobei das zweite Berechnungsverfahren dieselbe Berechnungsformel wie das erste Berechnungsverfahren verwendet,

wobei der erste betaOffset-RI-Index ein Index ist, der sich von dem zweiten betaOffset-RI-Index unterscheidet,

wobei die Basisstation (2) dazu konfiguriert ist, einen Zeitduplex-, TDD-, Betrieb durchzuführen.

wobei der erste Unterrahmen ein Unterrahmen ist, bei dem eine Übertragungsrichtung statisch oder semistatisch auf die Uplink-Verbindungsrichtung festgelegt ist,

wobei der zweite Unterrahmen ein Unterrahmen ist, bei dem die Übertragungsrichtung dynamisch zwischen der Uplink-Verbindungsrichtung und der Abwärtsverbindungsrichtung umgeschaltet wird,

wobei die ersten und zweiten Berechnungsverfahren derart sind, dass die für den zweiten Unterrahmen berechnete zweite Anzahl der codierten Symbole größer ist als die für den ersten Unterrahmen berechnete erste Anzahl der codierten Symbole,

wobei die Berechnungsformel eine Berechnung umfasst:

$$Q' = \min\left(\left\lceil \frac{O \cdot M_{sc}^{PUSCH-initial} \cdot N_{symb}^{PUSCH-initial} \cdot \beta_{offset}^{PUSCH}}{\sum_{r=0}^{C-1} K_r} \right\rceil, 4 \cdot M_{sc}^{PUSCH} \right)$$

wobei Q' die erste Anzahl der codierten Symbole oder die zweite Anzahl der codierten Symbole ist,

O die Anzahl der RI-Bits ist,

$M_{sc}^{PUSH}$ die Anzahl von Unterträgern ist, die für die Übertragung des physikalischen Uplink-Verbindungskanals (PUSCH) in einem aktuellen Unterrahmen für einen Transportblock geplant sind,

$N_{symb}^{PUSCH-initial}$ die Anzahl von Einzelträger-Frequenzmultiplexzugriffs- (SC-FDMA)- Symbolen je Unterrahmen für eine anfängliche PUSCH-Übertragung für denselben Transportblock ist,

$M_{sc}^{PUSCH-initial}$, C und $K_r$ Parameter sind, die aus einer anfänglichen Übertragung des physikalischen Abwärtsverbindungs-Steuerkanals (PDCCH) für denselben Transportblock erhalten werden, und

$\beta_{offset}^{PUSH}$ ein Offset-Parameter ist, der dem ersten betaOffset-Wert oder dem zweiten betaOffset-Wert entspricht.

**11.** Verfahren nach Anspruch 10, wobei der Funkrahmen periodisch alle 10 Unterrahmen wiederholt wird.

**12.** Verfahren nach Anspruch 10 oder 11, wobei der erste betaOffset-RI-Index und der zweite betaOffset-RI-Index in einem pusch-configDedicated-Informationselement innerhalb eines radioResourceConfigDedicated-Informationselements einer RRC-Verbindungsaufbaunachricht enthalten sind.

## Revendications

**1.** Terminal (1) sans fil **caractérisé en ce qu'**il comprend :

des moyens de réception, à partir d'une station (2) de base, d'un premier betaOffset-RI-Index et un second betaOffset-RI-Index ;

des moyens de détermination, lors de la transmission d'un premier signal de liaison montante dans une première sous-trame d'une trame radio, d'un premier nombre de symboles codés pour le premier signal de liaison montante selon un premier procédé de calcul ; et

des moyens de détermination, lors de la transmission d'un second signal de liaison montante dans une seconde sous-trame de la trame radio, d'un second nombre de symboles codés pour le second signal de liaison montante selon un second procédé de calcul,

dans lequel les premier et second signaux de liaison montante comprennent chacun un indicateur de rang, RI,

dans lequel le second procédé de calcul utilise la même formule de calcul que le premier procédé de calcul,

dans lequel la formule de calcul utilisée par le premier procédé de calcul utilise une première valeur de décalage bêta correspondant au premier betaOffset-RI-Index,

dans lequel la formule de calcul utilisée par le second procédé de calcul utilise une seconde valeur de décalage bêta correspondant au second betaOffset-RI-Index,

dans lequel le premier betaOffset-RI-Index est un indice qui est différent du second betaOffset-RI-Index,

dans lequel le terminal (1) sans fil est configuré pour réaliser un fonctionnement en duplex à répartition dans le temps, TDD,

dans lequel la première sous-trame est une sous-trame où une direction de transmission est fixée de manière statique ou semi-statique à une direction de liaison montante,

dans lequel la seconde sous-trame est une sous-trame où la direction de transmission est commutée dynamiquement entre la direction de liaison montante et la direction de liaison descendante,

dans lequel les premier et second procédés de calcul sont tels que le second nombre de symboles codés calculé pour la seconde sous-trame est plus grand que le premier nombre de symboles codés calculé pour la première sous-trame,

dans lequel la formule de calcul comprend un calcul :

$$Q' = \min\left(\left\lceil \frac{O \cdot M_{sc}^{PUSH\text{-}initial} \cdot N_{symb}^{PUSH\text{-}initial} \cdot \beta_{offset}^{PUSH}}{\sum_{r=0}^{C-1} K_r} \right\rceil, 4 \cdot M_{sc}^{PUSH} \right)$$

où Q' est le premier nombre de symboles codés ou le second nombre de symboles codés,

O est le nombre de bits de RI,

$M_{sc}^{PUSH}$ est le nombre de sous-porteuses programmées pour une transmission par canal physique partagé en liaison montante (PUSCH) dans une sous-trame actuelle pour un bloc de transport,

$N_{symb}^{PUSCH\text{-}initial}$ est le nombre de symboles d'accès multiple par répartition en fréquence à porteuse unique (SC-FDMA) par sous-trame pour une transmission PUSCH initiale pour le même bloc de transport,

$M_{sc}^{PUSCH\text{-}initial}$, C, et $K_r$ sont des paramètres obtenus à partir d'une transmission initiale par canal de commande en liaison descendante physique (PDCCH) pour le même bloc de transport, et

$\beta_{offset}^{PUSH}$ est un paramètre de décalage correspondant à la première valeur de décalage bêta ou à la seconde valeur de décalage bêta.

2. Terminal (1) sans fil selon la revendication 1, dans lequel la trame radio est répétée périodiquement toutes les 10 sous-trames.

3. Terminal (1) sans fil selon la revendication 1 ou la revendication 2, dans lequel le premier betaOffset-RI-Index et le second betaOffset-RI-Index sont contenus dans un élément d'information pusch-configDedicated au sein d'un élément d'information radioResourceConfigDedicated d'un message d'établissement de connexion RRC.

4. Station (2) de base **caractérisée en ce qu'**elle comprend :

des moyens de transmission, à un terminal (1) sans fil, d'un premier betaOffset-RI-Index et un second betaOffset-RI-Index ; et

des moyens de réception, en provenance du terminal (1) sans fil, d'un premier signal de liaison montante et un second signal de liaison montante,

dans laquelle les premier et second signaux de liaison montante comprennent chacun un indicateur de rang, RI,

dans laquelle le premier betaOffset-RI-Index correspond à une première valeur de décalage bêta utilisée dans une formule de calcul pour déterminer un premier nombre de symboles codés pour le premier signal de liaison montante selon la formule de calcul d'un premier procédé de calcul lorsque le terminal (1) sans fil transmet le premier signal de liaison montante dans une première sous-trame d'une trame radio,

dans laquelle le second betaOffset-RI-Index correspond à une seconde valeur de décalage bêta utilisée dans la formule de calcul pour déterminer un second nombre de symboles codés pour le second signal de liaison montante selon la formule de calcul d'un second procédé de calcul lorsque le terminal (1) sans fil transmet le second signal de liaison montante dans une seconde sous-trame de la trame radio,

dans laquelle le second procédé de calcul utilise la même formule de calcul que le premier procédé de calcul,

dans laquelle le premier betaOffset-RI-Index est un indice qui est différent du second betaOffset-RI-Index,

dans laquelle la station (2) de base est configurée pour réaliser un fonctionnement en duplex à répartition dans le temps, TDD.

dans laquelle la première sous-trame est une sous-trame où une direction de transmission est fixée de manière statique ou semi-statique à une direction de liaison montante,

dans laquelle la seconde sous-trame est une sous-trame où la direction de transmission est commutée dynamiquement entre la direction de liaison montante et la direction de liaison descendante,

dans laquelle les premier et second procédés de calcul sont tels que le second nombre de symboles codés calculé pour la seconde sous-trame est plus grand que le premier nombre de symboles codés calculé pour la première sous-trame,

dans laquelle la formule de calcul comprend un calcul :

$$Q' = \min\left(\left\lceil \frac{O \cdot M_{sc}^{PUSH\text{-}initial} \cdot N_{symb}^{PUSH\text{-}initial} \cdot \beta_{offset}^{PUSH}}{\sum_{r=0}^{C-1} K_r} \right\rceil, 4 \cdot M_{sc}^{PUSH}\right)$$

où Q' est le premier nombre de symboles codés ou le second nombre de symboles codés,

O est le nombre de bits de RI,

$M_{sc}^{PUSH}$ est le nombre de sous-porteuses programmées pour une transmission par canal physique partagé en liaison montante (PUSCH) dans une sous-trame actuelle pour un bloc de transport,

$N_{symb}^{PUSCH\text{-}initial}$ est le nombre de symboles d'accès multiple par répartition en fréquence à porteuse unique (SC-FDMA) par sous-trame pour une transmission PUSCH initiale pour le même bloc de transport,

$M_{sc}^{PUSCH\text{-}initial}$, C, et $K_r$ sont des paramètres obtenus à partir d'une transmission initiale par canal de commande en liaison descendante physique (PDCCH) pour le même bloc de transport, et

$\beta_{offset}^{PUSH}$ est un paramètre de décalage correspondant à la première valeur de décalage bêta ou à la seconde valeur de décalage bêta.

5. Station (2) de base selon la revendication 4, dans laquelle la trame radio est répétée périodiquement toutes les 10 sous-trames.

6. Station (2) de base selon la revendication 4 ou la revendication 5, dans laquelle le premier betaOffset-RI-Index et le second betaOffset-RI-Index sont contenus dans un élément d'information pusch-configDedicated au sein d'un élément d'information radioResourceConfigDedicated d'un message d'établissement de connexion RRC.

7. Procédé réalisé par un terminal (1) sans fil comprenant :

la réception, à partir d'une station (2) de base, d'un premier betaOffset-RI-Index et d'un second betaOffset-RI-Index ;

lors de la transmission d'un premier signal de liaison montante dans une première sous-trame d'une trame radio, la détermination d'un premier nombre de symboles codés pour le premier signal de liaison montante selon un premier procédé de calcul ; et

lors de la transmission d'un second signal de liaison montante dans une seconde sous-trame de la trame radio, la détermination d'un second nombre de symboles codés pour le second signal de liaison montante selon un second procédé de calcul,

dans lequel les premier et second signaux de liaison montante comprennent chacun un indicateur de rang, RI,

dans lequel le second procédé de calcul utilise la même formule de calcul que le premier procédé de calcul,

dans lequel la formule de calcul utilisée par le premier procédé de calcul utilise une première valeur de décalage bêta correspondant au premier betaOffset-RI-Index,

dans lequel la formule de calcul utilisée par le second procédé de calcul utilise une seconde valeur de décalage bêta correspondant au second betaOffset-RI-Index,

dans lequel le premier betaOffset-RI-Index est un indice qui est différent du second betaOffset-RI-Index,

dans lequel le terminal (1) sans fil est configuré pour réaliser un fonctionnement en duplex à répartition dans le temps, TDD,

dans lequel la première sous-trame est une sous-trame où une direction de transmission est fixée de manière statique ou semi-statique à une direction de liaison montante,

dans lequel la seconde sous-trame est une sous-trame où la direction de transmission est commutée dynamiquement entre la direction de liaison montante et la direction de liaison descendante,

dans lequel les premier et second procédés de calcul sont tels que le second nombre de symboles codés calculé pour la seconde sous-trame est plus grand que le premier nombre de symboles codés calculé pour la première sous-trame,

dans lequel la formule de calcul comprend un calcul :

$$Q' = \min\left(\left\lceil \frac{O \cdot M_{sc}^{PUSH\text{-}initial} \cdot N_{symb}^{PUSH\text{-}initial} \cdot \beta_{offset}^{PUSH}}{\sum_{r=0}^{C-1} K_r} \right\rceil, 4 \cdot M_{sc}^{PUSH}\right)$$

où Q' est le premier nombre de symboles codés ou le second nombre de symboles codés,

O est le nombre de bits de RI,

$M_{sc}^{PUSH}$ est le nombre de sous-porteuses programmées pour une transmission par canal physique partagé en liaison montante (PUSCH) dans une sous-trame actuelle pour un bloc de transport,

$N_{symb}^{PUSCH\text{-}initial}$ est le nombre de symboles d'accès multiple par répartition en fréquence à porteuse unique (SC-FDMA) par sous-trame pour une transmission PUSCH initiale pour le même bloc de transport,

$M_{sc}^{PUSCH\text{-}initial}$, C, et $K_r$ sont des paramètres obtenus à partir d'une transmission initiale par canal de commande en liaison descendante physique (PDCCH) pour le même bloc de transport, et

$\beta_{offset}^{PUSH}$ est un paramètre de décalage correspondant à la première valeur de décalage bêta ou à la seconde valeur de décalage bêta.

**8.** Procédé selon la revendication 7, dans lequel la trame radio est répétée périodiquement toutes les 10 sous-trames.

**9.** Procédé selon la revendication 7 ou la revendication 8, dans lequel le premier betaOffset-RI-Index et le second betaOffset-RI-Index sont contenus dans un élément d'information pusch-configDedicated au sein d'un élément d'information radioResourceConfigDedicated d'un message d'établissement de connexion RRC.

**10.** Procédé réalisé par une station (2) de base, comprenant :

la transmission, à un terminal (1) sans fil, d'un premier betaOffset-RI-Index et d'un second betaOffset-RI-Index ; et

la réception, en provenance du terminal (1) sans fil, d'un premier signal de liaison montante et d'un second signal de liaison montante,

dans lequel les premier et second signaux de liaison montante comprennent chacun un indicateur de rang, RI,

dans lequel le premier betaOffset-RI-Index correspond à une première valeur de décalage bêta utilisée dans une formule de calcul pour déterminer un premier nombre de symboles codés pour le premier signal de liaison montante selon la formule de calcul d'un premier procédé de calcul lorsque le terminal (1) sans fil transmet le premier signal de liaison montante dans une première sous-trame d'une trame radio,

dans lequel le second betaOffset-RI-Index correspond à une seconde valeur de décalage bêta utilisée dans la formule de calcul pour déterminer un second nombre de symboles codés pour le second signal de liaison montante selon la formule de calcul d'un second procédé de calcul lorsque le terminal (1) sans fil transmet le second signal de liaison montante dans une seconde sous-trame de la trame radio,

dans lequel le second procédé de calcul utilise la même formule de calcul que le premier procédé de calcul,

dans lequel le premier betaOffset-RI-Index est un indice qui est différent du second betaOffset-RI-Index,

dans lequel la station (2) de base est configurée pour réaliser un fonctionnement en duplex à répartition dans le temps, TDD.

dans lequel la première sous-trame est une sous-trame où une direction de transmission est fixée de manière statique ou semi-statique à une direction de liaison montante,

dans lequel la seconde sous-trame est une sous-trame où la direction de transmission est commutée dynamiquement entre la direction de liaison montante et la direction de liaison descendante,

dans lequel les premier et second procédés de calcul sont tels que le second nombre de symboles codés calculé pour la seconde sous-trame est plus grand que le premier nombre de symboles codés calculé pour la première sous-trame,

dans lequel la formule de calcul comprend un calcul :

$$Q' = \min\left(\left\lceil \frac{O \cdot M_{sc}^{PUSH\text{-}initial} \cdot N_{symb}^{PUSH\text{-}initial} \cdot \beta_{offset}^{PUSH}}{\sum_{r=0}^{C-1} K_r} \right\rceil, 4 \cdot M_{sc}^{PUSH}\right)$$

où Q' est le premier nombre de symboles codés ou le second nombre de symboles codés,

O est le nombre de bits de RI,

$M_{sc}^{PUSH}$ est le nombre de sous-porteuses programmées pour une transmission par canal physique partagé en liaison montante (PUSCH) dans une sous-trame actuelle pour un bloc de transport,

$N_{symb}^{PUSCH\text{-}initial}$ est le nombre de symboles d'accès multiple par répartition en fréquence à porteuse unique (SC-FDMA) par sous-trame pour une transmission PUSCH initiale pour le même bloc de transport,

$M_{sc}^{PUSCH\text{-}initial}$, C, et $K_r$ sont des paramètres obtenus à partir d'une transmission initiale par canal de commande en liaison descendante physique (PDCCH) pour le même bloc de transport, et

$\beta_{offset}^{PUSH}$ est un paramètre de décalage correspondant à la première valeur de décalage bêta ou à la seconde valeur de décalage bêta.

11. Procédé selon la revendication 10, dans lequel la trame radio est répétée périodiquement toutes les 10 sous-trames.

12. Procédé selon la revendication 10 ou la revendication 11, dans lequel le premier betaOffset-RI-Index et le second betaOffset-RI-Index sont contenus dans un élément d'information pusch-configDedicated au sein d'un élément d'information radioResourceConfigDedicated d'un message d'établissement de connexion RRC.

Fig. 1

ONE RADIO FRAME = 10 ms

| SUBFRAME #0 | SUBFRAME #1 | SUBFRAME #2 | SUBFRAME #3 | SUBFRAME #4 | SUBFRAME #5 | SUBFRAME #6 | SUBFRAME #7 | SUBFRAME #8 | SUBFRAME #9 |
|---|---|---|---|---|---|---|---|---|---|

ONE SUBFRAME = 1 ms

ONE SLOT = 0.5 ms

| SLOT 0 | SLOT 1 |
|---|---|

7 SYMBOLS

ONE SUBFRAME = 1 ms

ONE SC-FDMA SYMBOL

ONE RESOURCE
ELEMENT

ONE SUBCARRIER

FREQUENCY

SLOT 0    SLOT 1

TIME

Fig. 2

| UPLINK-DOWNLINK CONFIGURATION | SUBFRMAE NUMBER | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

Fig. 3

ONE SUBFRAME = 1 ms

Fig. 4

CQI/PMI BITS      RI BIT(S)      HARQ-ACK/NACK BIT(S)

CHANNEL CODING 501

CHANNEL CODING 502

CHANNEL CODING 503

CODED UL-SCH DATA BITS

CODED CQI/PMI BITS

DATA AND CONTROL MULTIPLEXING 504

CODED RI BITS

CODED HARQ-ACK/NACK BITS

CHANNEL INTERLEAVER 505

SCRAMBLING 506

MODULATION 507

RESOURCE ELEMENT MAPPING 508

SC-FDMA SIGNAL GENERATION 509

SC-FDMA SIGNAL (UPLINK SIGNAL)

Fig. 5

Fig. 6A

EP 3 096 478 B1

ONE RADIO FRMAE

MACRO BASE STATION 601

| 0 | 1 | 2 | 3 | 4 | 5 | 6 | 7 | 8 | 9 |

UL-DL CONFIGURATION #0

| D | S | U | U | U | D | S | U | U | U |

SMALL BASE STATION 602

TIME #1: UL-DL CONFIGURATION #0

| D | S | U | U | U | D | S | U | U | U |

TIME #2: UL-DL CONFIGURATION #1

| D | S | U | U | D | D | S | U | U | D |

TIME #3: UL-DL CONFIGURATION #2

| D | S | U | D | D | D | S | U | D | D |

Fig. 6B

Fig. 7

S11

CURRENT SUBFRAME IS
FLEXIBLE SUBFRAME
?

NO

S12

USE BETA OFFSET $\beta 1$
FOR FIXED SUBFRAME

YES

S13

USE BETA OFFSET $\beta 2$
FOR FLEXIBLE SUBFRAME

Fig. 8

Fig. 9A

ONE RADIO FRMAE

MACRO BASE STATION 2

UL-DL CONFIGURATION #0

| 0 | 1 | 2 | 3 | 4 | 5 | 6 | 7 | 8 | 9 |
|---|---|---|---|---|---|---|---|---|---|
| D | S | U | U | U | D | S | U | U | U |

SMALL BASE STATION 3

UL-DL CONFIGURATION #2

| D | S | U | D | D | D | S | U | D | D |

UE 1

BETA-OFFSET USED FOR UCI

| | | $\beta 1$ | $\beta 2$ | $\beta 2$ | | | $\beta 1$ | $\beta 2$ | $\beta 2$ |

SIMULTANEOUS UPLINK AND
DOWNLINK TRANSMISSIONS

Fig. 9B

EP 3 096 478 B1

Fig. 10

Fig. 11

<u>1</u>

| PROCESSOR<br><br><u>101</u> | ◄──────► | TRANSCEIVER<br>(RF UNIT)<br><br><u>102</u> |
|---|---|---|

Fig. 12

<u>2</u>

| PROCESSOR<br><br><u>201</u> | ◄──────► | TRANSCEIVER<br>(RF UNIT)<br><br><u>202</u> |
|---|---|---|

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011137408 A2
- EP 2637347 A2
- JP 2014004945 A